# EUROPÄISCHE PATENTSCHRIFT

(11) **EP 4 297 919 B1**
(45) Veröffentlichungstag und Bekanntmachung des Hinweises auf die Patenterteilung: **02.04.2025**
(21) Anmeldenummer: 22711433.7
(22) Anmeldetag: 22.02.2022
(51) Int. Cl.: B21D 5/00, B21D 5/02, B21D 22/02, B21D 22/20, B21D 55/00, F16H 25/20, H02K 7/06

(54) **VERFAHREN UND VORRICHTUNG ZUM UMFORMEN EINES WERKSTÜCKES**
METHOD AND DEVICE FOR SHAPING A WORKPIECE
PROCÉDÉ ET DISPOSITIF DE FORMAGE D´UNE PIÈCE

(30) Priorität: 23.02.2021 AT 501212021
(43) Veröffentlichungstag der Anmeldung: 03.01.2024
(73) Patentinhaber: TRUMPF Maschinen Austria GmbH & Co. KG., 4061 Pasching (AT)
(72) Erfinder: SPEZIALI, Stefano, 06034 Foligno (IT)
(74) Vertreter: Burger, Hannes
(86) Internationale Anmeldenummer: PCT/AT2022/060047
(87) Internationale Veröffentlichungsnummer: WO 2022/178562

(56) Entgegenhaltungen:
- EP-A1- 3 412 372
- EP-A2- 3 575 010
- US-A1- 2019 076 905

## Beschreibung

Die Erfindung betrifft ein Verfahren zum Umformen eines, vorzugsweise plattenförmigen, Werkstückes mit einer Umformmaschine gemäß dem Oberbegriff des Anspruch 1. Die Erfindung betrifft auch eine Umformmaschine.

Aus dem Stand der Technik sind verschiedene Arten von Umformmaschinen, insbesondere Biegemaschinen, bekannt. Dabei wird meistens ein hydraulischer Pressantrieb verwendet, dessen Betätigung die Arbeitsbewegung eines oder mehrerer Umformwerkzeuge(s) auslöst. Bremseinrichtungen sind dazu vorgesehen, die Sicherheit der Maschine zu erhöhen und insbesondere das Personal zu schützen.

Auf einem ganz anderen Gebiet offenbart die EP1524455A2 im Zusammenhang mit einem elektrisch betätigten linearen Aktuator in Form eines Spindelantriebes einen Motor, welcher über ein Getriebe eine Antriebswelle innerhalb des Antriebsgehäuses antreibt. Weiters vorgesehen ist eine Bremseinrichtung, welche eine axial bewegbare erste Kupplungsscheibe und eine mit der Antriebswelle über eine Nabe zusammenwirkende zweite Kupplungsscheibe umfasst. Die erste Kupplungsscheibe drückt die zweite Kupplungsscheibe gegen eine dritte Kupplungsscheibe. Durch Betätigung einer Spule wird die erste Kupplungsscheibe in eine freigebende Stellung bewegt, sodass die zweite Kupplungsscheibe mit der Antriebswelle rotieren kann.

Die EP2333380A1 offenbart ebenfalls im Zusammenhang mit einem linearen Aktuator als Antriebsquelle einen Motor und eine Bremseinrichtung mit einer rotierenden Bremsscheibe und einer stationären Bremsscheibe, welche relativ zur rotierenden Bremsscheibe bewegbar ist und durch Reibung eine Bremsung der Antriebswelle ermöglicht.

Die US2019076905A1 bildet die Basis für die Präambel der Ansprüche 1 und 9 und offenbart ein Verfahren zum Umformen eines Werkstückes mit einer Umformmaschine, welche eine Pressmaschine ist. Dabei ist eine Faltenerzeugungsdetektionsvorrichtung vorgesehen, um Falten, die in dem umzuformenden Material erzeugt werden, zu erfassen.

Die EP3575010A2 offenbart eine Doppelzuschnitterfassungsvorrichtung für eine Pressmaschine und eine Werkzeugschutzvorrichtung für eine Pressmaschine.

Die EP3412372A1 betrifft ebenso wie die vorangegangene Druckschrift eine Doppelzuschnitterfassungsvorrichtung für eine Pressmaschine.

Die sich aus dem Stand der Technik ergebenden Nachteile bestehen insbesondere darin, dass die darin offenbarten Antriebe und deren Betrieb für die Anwendung des Umformens von Werkstücken, insbesondere für Umformschritte, welche präzise und reproduzierbar erfolgen müssen, nicht geeignet sind. Zu erwähnen ist auch, dass die Bremswirkung, insbesondere das Bremsmoment bzw. die Bremskraft, für bestimmte Anwendungen zu gering ist. Der Bremsvorgang, d.h. die Zeit, die zwischen einer Betätigung der Bremseinrichtung und der Bremswirkung (z.B. Stillstand des Antriebs oder Abbremsung auf ein gewünschtes Niveau) ergeht, ist dabei oftmals zu lang.

Aufgabe der vorliegenden Erfindung war es, die Nachteile des Standes der Technik zu überwinden und ein Verfahren zum Umformen eines Werkstückes zur Verfügung zu stellen, mit dem einerseits eine unmittelbare und schnell einsetzende Wirkung des Umformwerkzeuges auf das Werkstück erzielt werden kann und andererseits die Effizienz und Genauigkeit der Werkstückumformung erhöht wird. Zudem soll die jeweilige Wirkung des Umformwerkzeuges möglichst definiert sein, insbesondere hinsichtlich der Höhe der ausgeübten Kraft und/oder der Dauer der Krafteinwirkung. Außerdem soll insbesondere für jene Fälle, in denen ein Umformschritt mehrere Teilschritte umfasst, die für eine Werkstückumformung benötigte Zeit reduziert werden können. In bevorzugten Ausführungsformen sollen auch die Bremswirkung und die Effizienz des Bremsvorganges bzw. der Aufbringung des Bremsmomentes erhöht werden.

Diese Aufgabe wird durch ein Verfahren der eingangs genannten Art dadurch gelöst,
dass vor einer Bewegungsphase des Umformwerkzeuges die elektrische Antriebsquelle ein Antriebsmoment generiert, während die Bremseinrichtung in der Bremsstellung ist, sodass das Bremsmoment der Bremseinrichtung dem Antriebsmoment der elektrischen Antriebsquelle entgegenwirkt, und der Beginn der Bewegungsphase des Umformwerkzeuges durch Überführen der Bremseinrichtung in die gelöste Stellung und/oder in eine Stellung mit verringertem Bremsmoment ausgelöst wird
   und/oder
dass während eines Umformschrittes die Arbeitsbewegung des Umformwerkzeuges intermittierend erfolgt, wobei die intermittierende Arbeitsbewegung des Umformwerkzeuges durch eine intermittierende Betätigung der Bremseinrichtung zwischen gelöster Stellung oder Stellung mit verringertem Bremsmoment und Bremsstellung bewirkt wird und die elektrische Antriebsquelle auch während jener Phasen der intermittierenden Betätigung der Bremseinrichtung, in denen sich die Bremseinrichtung in der Bremsstellung befindet, ein Antriebsmoment generiert.

Bei dem umzuformenden Werkstück handelt es sich vorzugsweise um ein plattenförmiges Werkstück aus Metall, insbesondere ein Blech. Die Umformmaschine ist somit vorzugsweise eine Blechumformmaschine, insbesondere eine Biegemaschine, wie eine Biegepresse oder eine Schwenkbiegemaschine.

Das Verfahren wird durch eine Steuereinrichtung gesteuert. Die Steuereinrichtung steuert einerseits die elektrische Antriebsquelle und andererseits die Bremseinrichtung, sodass mit der Steuereinrichtung die Bewegungsphase(n), insbesondere deren Beginn und/oder deren Abfolge, gesteuert werden können. Die Steuereinrichtung betätigt somit - entsprechend dem erfindungsgemäßen Verfahren - die elektrische Antriebsquelle und die Bremseinrichtung und steuert damit Antriebsmoment (der Antriebsquelle) und Bremsmoment (der Bremseinrichtung). Die Antriebsquelle und die Bremseinrichtung wirken dabei - direkt oder indirekt - auf das Umformwerkzeug ein.

So kann z.B. in der Steuereinrichtung (z.B. neben anderen Betriebsmodi) ein Betriebsmodus hinterlegt sein, welcher dem erfindungsgemäßen Verfahren entspricht.

Durch die erfindungsgemäße Maßnahme kann die Arbeitsbewegung des Umformwerkzeuges in einzelne Bewegungsphasen unterteilt werden, wobei zwischen den einzelnen Bewegungsphasen das Umformwerkzeug gestoppt oder verlangsamt wird. Die Unterteilung in die einzelnen Bewegungsphasen erfolgt durch die Bremseinrichtung. D.h. die Arbeitsbewegung kann durch die Bremseinrichtung gesteuert werden.

Die Erfindung besitzt zwei wesentliche Vorteile. Die Bremseinrichtung dient gemäß der ersten Variante dazu den Beginn einer Bewegungsphase auszulösen. Dadurch übernimmt die Bremseinrichtung eine Steuerfunktion, welche sich nicht (nur) auf das Bremsen bzw. Stoppen einer Arbeitsbewegung bezieht, sondern auf das Auslösen bzw. Freigeben einer Bewegung.

Eine solche Art der Ansteuerung kann nicht nur für eine einmalige Bewegungsphase, sondern insbesondere auch auf für intermittierende (z.B. hämmernde) Arbeitsbewegungen mit mehreren unterbrochenen Bewegungsphasen verwendet werden. Hier kommt der Bremseinrichtung die Funktion zu, den Ablauf der Bewegungsphasen zu steuern.

Der große Vorteil dieser Idee besteht darin, dass das zu Beginn der Bewegungsphase (und somit zu Beginn der Werkstückbearbeitungsphase) das Antriebsmoment der Antriebsquelle nicht erst aufgebaut werden muss, sondern bereits zur Verfügung steht. Ein schnelles Überführen der Bremseinrichtung in die gelöste Stellung bewirkt ein unmittelbares Einwirken des bereits vorhandenen Antriebsmomentes auf das Umformwerkzeug und somit auf das Werkstück. Dadurch erfolgt ein definierter Arbeitsschritt, welcher zudem durch einen zeitlich und hinsichtlich der einwirkenden Kraft definierten und stets genau reproduzierbaren Puls bzw. Stoß eingeleitet wird.

Ein weiterer Vorteil besteht darin, dass eine Abfolge von Bewegungsphasen in intermittierender Betätigung durch das Zusammenwirken einer elektrischen Antriebsquelle mit einer betätigbaren Bremseinrichtung überhaupt erst ermöglicht wird. Auch hier wird das Verfahren durch die Steuereinrichtung gesteuert. Die Steuereinrichtung steuert einerseits die elektrische Antriebsquelle und andererseits die Bremseinrichtung, sodass mit der Steuereinrichtung die Bewegungsphase(n) der intermittierenden Bewegung, insbesondere deren Beginn und/oder deren Abfolge, gesteuert werden können.

Die Bremseinrichtung umfasst einen Aktor, der mit der Steuereinrichtung der Umformmaschine verbunden ist. Die Steuereinrichtung überführt somit die Bremseinrichtung durch Ansteuern des Aktors zwischen gelöster und Brems- Stellung.

Die Bremseinrichtung ist vorzugsweise eine Reibungsbremse. Dadurch kann ein besonders schneller Übergang zwischen Bremsstellung und gelöster Stellung erreicht werden. Dadurch können die Bewegungsphasen und die Phasen zwischen den Bewegungsphasen jeweils bevorzugt weniger als 1,5 Sekunden, vorzugsweise weniger als 1 Sekunde, betragen.

Eine bevorzugte Ausführungsform zeichnet sich dadurch aus, dass die Bewegungsrichtung des Umformwerkzeuges in den einzelnen Bewegungsphasen einer intermittierenden Arbeitsbewegung unverändert bleibt und/oder dass sich der während einer intermittierenden Arbeitsbewegung zurückgelegte Weg des Umformwerkzeuges aus den während der einzelnen Bewegungsphasen der intermittierenden Arbeitsbewegung zurückgelegten Wegabschnitten zusammensetzt. Hier handelt es sich um eine fortschreitende Bewegung des Umformwerkzeuges. Z.B. kann hier ein Biegeschritt durch einzelne Teilschritte erreicht werden. Dabei können die (sich wiederholenden) stoßartigen Bewegungen des Umformwerkzeuges die nötige Umformkraft erzeugen.

Eine bevorzugte Ausführungsform zeichnet sich dadurch aus, dass die Arbeitsbewegung des Umformwerkzeuges während eines Umformschrittes mehrere, vorzugsweise zumindest drei, Bewegungsphasen umfasst, wobei die Bewegungsphasen unterbrochen sind durch Phasen, in denen das Umformwerkzeug stillsteht oder mit geringerer Geschwindigkeit als in der Bewegungsphase bewegt wird, wobei vorzugsweise jeweils die Länge einer einzelnen Bewegungsphase weniger als 3 Sekunden, bevorzugt weniger als 1,5 Sekunden, beträgt und/oder wobei vorzugsweise jeweils die Länge einer Phase, in denen das Umformwerkzeug stillsteht oder mit geringerer Geschwindigkeit als in der Bewegungsphase bewegt wird, weniger als 3 Sekunden, bevorzugt weniger als 1,5 Sekunden, beträgt.

Eine bevorzugte Ausführungsform zeichnet sich dadurch aus, dass eine intermittierende Arbeitsbewegung des Umformwerkzeuges durch eine intermittierende Betätigung der Bremseinrichtung zwischen gelöster Stellung und Bremsstellung bewirkt wird. Hier übernimmt die Bremseinrichtung eine Steuerfunktion, wodurch eine präzise und wohldefinierte Bearbeitung des Werkstückes gewährleistet wird.

Eine bevorzugte Ausführungsform zeichnet sich dadurch aus, dass die elektrische Antriebsquelle auch während jener Phasen der intermittierenden Betätigung der Bremseinrichtung, in denen sich die Bremseinrichtung in der Bremsstellung befindet, ein Antriebsmoment generiert. Die Antriebsquelle muss hier nicht immer von neuem ein Antriebsmoment aufbauen, was zu Beginn einer jeden Bewegungsphase mit einer wiederkehrenden Latenz verbunden wäre.

Eine bevorzugte Ausführungsform zeichnet sich dadurch aus, dass das Antriebsmoment des Motors während eines Umformschrittes mit intermittierender Arbeitsbewegung des Umformwerkzeuges im Wesentlichen konstant gehalten wird. Dadurch wird der Steueraufwand für die Antriebsquelle minimiert, während die Steuerung über die Bremseinrichtung erfolgt.

Eine bevorzugte Ausführungsform zeichnet sich dadurch aus, dass der elektromechanische Antrieb einen Rotationsteil umfasst und die Bremseinrichtung auf den Rotationsteil wirkt, wobei vorzugsweise die elektrische Antriebsquelle durch einen Motor, dessen Antriebsmoment auf den Rotationsteil wirkt, gebildet ist. Hier können einfache und effiziente Bremseinrichtungen wie Reibungsbremsen sowie leistungsstarke Antriebe wie Motoren verwendet werden.

Eine bevorzugte Ausführungsform zeichnet sich dadurch aus, dass das auf den Rotationsteil wirkende Bremsmoment - während jener Phasen der intermittierenden Betätigung der Bremseinrichtung, in denen sich die Bremseinrichtung in der Bremsstellung befindet - höher ist als das auf den Rotationsteil wirkende Antriebsmoment. Durch diese Maßnahme kann die Bewegung des Umformwerkzeuges zwischen den einzelnen Bewegungsphasen zum Stillstand gebracht werden.

Eine bevorzugte Ausführungsform zeichnet sich dadurch aus, dass der elektromechanische Antrieb einen Übertragungsmechanismus, insbesondere ein Lineargetriebe, umfasst, der die Rotation des Rotationsteils in eine lineare Bewegung eines Übertragungselementes, welches direkt oder indirekt auf das Umformwerkzeug wirkt, umwandelt, wobei vorzugsweise das Übertragungselement in Form einer Spindel ausgebildet ist.

Eine bevorzugte Ausführungsform zeichnet sich dadurch aus, dass die Bremseinrichtung in dem elektromechanischen Antrieb integriert ist und/oder dass die elektrische Antriebsquelle und die Bremseinrichtung in demselben Gehäuse untergebracht sind.

Die Erfindung betrifft auch eine Umformmaschine, insbesondere Biegemaschine, zum Umformen eines, vorzugsweise plattenförmigen, Werkstückes, wobei die Umformmaschine
- zumindest einen elektromechanischen Antrieb mit einer elektrischen Antriebsquelle,
- zumindest ein Umformwerkzeug, dessen Arbeitsbewegung durch den elektromechanischen Antrieb bewirkt wird,
- zumindest eine zwischen einer gelösten Stellung und einer Bremsstellung betätigbare Bremseinrichtung zum Bremsen und/oder Blockieren der Arbeitsbewegung des Umformwerkzeuges und
- eine Steuereinrichtung zur Steuerung der elektrischen Antriebsquelle und der Bremseinrichtung

umfasst, dadurch gekennzeichnet, dass in der Steuereinrichtung ein Betriebsmodus hinterlegt ist, durch den die elektrische Antriebsquelle und die Bremseinrichtung derart ansteuerbar sind,
dass vor einer Bewegungsphase des Umformwerkzeuges die elektrische Antriebsquelle ein Antriebsmoment generiert, während die Bremseinrichtung in der Bremsstellung ist, sodass das Bremsmoment der Bremseinrichtung dem Antriebsmoment der elektrischen Antriebsquelle entgegenwirkt, und der Beginn der Bewegungsphase des Umformwerkzeuges durch Überführen der Bremseinrichtung in die gelöste Stellung und/oder in eine Stellung mit verringertem Bremsmoment ausgelöst wird
   und/oder
dass während eines Umformschrittes die Arbeitsbewegung des Umformwerkzeuges intermittierend erfolgt, wobei die intermittierende Arbeitsbewegung des Umformwerkzeuges durch eine intermittierende Betätigung der Bremseinrichtung zwischen gelöster Stellung oder Stellung mit verringertem Bremsmoment und Bremsstellung bewirkt wird und die elektrische Antriebsquelle auch während jener Phasen der intermittierenden Betätigung der Bremseinrichtung, in denen sich die Bremseinrichtung in der Bremsstellung befindet, ein Antriebsmoment generiert.

Die Umformmaschine ist vorzugsweise eine Biegemaschine und kann z.B. als Biegepresse, insbesondere Abkantpresse, oder als Schenkbiegemaschine ausgebildet sein.

Eine solche Umformmaschine kann einen ersten (z.B. oberen) Werkzeugträger und einen zweiten (z.B. unteren) Werkzeugträger umfassen, deren Relativbewegung die Arbeitsbewegung ist. Dabei kann z.B. ein Werkzeugträger stationär sein, während der andere Werkzeugträger durch den elektrischen Antrieb bewegbar ist.

Der zumindest eine elektrische Antrieb der Umformmaschine wirkt dabei auf einen Werkzeugträger, vorzugsweise den oberen Werkzeugträger. Das Umformwerkzeug wird von einem Werkzeugträger gehalten.

Eine bevorzugte Ausführungsform zeichnet sich dadurch aus, dass der elektromechanische Antrieb einen Rotationsteil umfasst und die Bremseinrichtung auf den Rotationsteil wirkt, wobei vorzugsweise die elektrische Antriebsquelle durch einen Motor, dessen Antriebsmoment auf den Rotationsteil wirkt, gebildet ist.

In nachfolgenden Ausführungsformen sollen auch die Bremswirkung und die Effizienz des Bremsvorganges bzw. der Aufbringung des Bremsmomentes erhöht werden. Dadurch soll insbesondere die Sicherheit bei Anwendungen, in denen Bedienpersonen im Gefahrenbereich arbeiten bzw. hantieren und Antriebe aus diesem Grund unter bestimmten Bedingungen unmittelbar zum Stillstand kommen müssen, erhöht werden. Die Zuverlässigkeit, Leistungsfähigkeit und Einsetzbarkeit eines elektromechanischen Antriebes in verschiedensten Anwendungsgebieten soll durch eine Verbesserung der Bremseinrichtung erhöht werden.

Eine bevorzugte Ausführungsform zeichnet sich dadurch aus, dass die elektrische Antriebsquelle ein Motor ist und dass der elektromechanische Antrieb einen Rotationsteil, der durch den Motor um eine Rotationsachse in Rotation versetzbar ist, und dass die Bremseinrichtung eine mit dem Rotationsteil mitdrehende Bremsscheibe und ein in axialer Richtung verstellbares Bremselement, welches in der Bremsstellung auf die Bremsscheibe einwirkt, aufweist, wobei die Bremsscheibe
- einen inneren Bereich,
- einen ringförmig um die Rotationsachse verlaufenden Reibflächenbereich mit einer ersten Reibfläche, die an einer ersten Seite der Bremsscheibe ausgebildet ist, und
- einen Zwischenbereich, der zwischen dem Reibflächenbereich und dem inneren Bereich um die Rotationsachse verläuft,
aufweist, und dass an dem Bremselement eine erste Gegenfläche ausgebildet ist, die der ersten Reibfläche zugewandt ist und in der Bremsstellung mit der ersten Reibfläche zusammenwirkt.

Das Bremselement rotiert nicht mit dem Rotationsteil. Mit anderen Worten: das Bremselement ist hinsichtlich der Rotation des Rotationsteils bzw. der mit dem Rotationsteil rotationsverbundenen Bremsscheibe stationär. Das Bremselement übt in der Bremsstellung durch Reibschluss mit der Bremsscheibe eine Bremswirkung aus. Gemäß der Ausführungsform der Erfindung befindet sich der Reibflächenbereich in radialer Richtung außerhalb des inneren Bereichs und auch außerhalb des Zwischenbereichs. Während der innere Bereich als Befestigungsbereich (zur Befestigung an den Rotationsteil) dienen kann, ist der Zwischenbereich vorzugsweise verformbar ausgebildet. Es ist bevorzugt, wenn der innere Bereich und der Zwischenbereich auch in der Bremsstellung nicht in Kontakt mit dem Bremselement ist. Die Bremswirkung ist am höchsten im peripheren Bereich. Zum einen ist dort die Geschwindigkeit am größten, zum anderen ist dort auch das größte Bremsmoment aufbringbar.

Das Bremselement ist in axialer Richtung von der gelösten Stellung in die Bremsstellung bewegbar. Durch diese Bewegung wird der Bremsspalt verringert, bis das Bremselement mit seiner ersten Gegenfläche gegen die erste Reibfläche der Bremsscheibe drückt.

Über die radial weiter innen liegenden Bereiche (innerer Bereich und Zwischenbereich) wird das Bremsmoment auf den Rotationsteil übertragen.

Die Bremsscheibe kann - mit ihrem inneren Bereich - relativ zum Rotationsteil axial fixiert sein. Das Bremselement drückt in der Bremsstellung gegen den weiter außen liegenden Reibflächenbereich, wodurch eine Verformungskraft auf die Bremsscheibe ausgeübt wird. Letztere möchte sich in axialer Richtung verbiegen.

Der Rotationsteil kann z.B. eine Antriebswelle, eine Gewindemutter (z.B. bei einem Spindelantrieb), ein Rotor (eines Elektromotors) oder jedes beliebige, sich drehende Element eines Antriebsstranges sein.

Eine bevorzugte Ausführungsform zeichnet sich dadurch aus, dass der Zwischenbereich der Bremsscheibe - sowohl in der gelösten Stellung als auch in der Bremsstellung - kontaktfrei zu dem Bremselement ist und/oder dass in der Bremsstellung der Kontakt des Bremselementes mit der Bremsscheibe auf die erste Reibfläche beschränkt ist. Durch diese Maßnahme wird bewirkt, dass der Reibschluss nur im Bereich des Reibflächenbereichs entsteht, während der innere Bereich und der Zwischenbereich mit dem Bremselement nicht in direkten Kontakt gelangen. Insbesondere der Zwischenbereich kann so eine zusätzliche Funktionalität wahrnehmen.

Eine bevorzugte Ausführungsform zeichnet sich dadurch aus, dass der Zwischenbereich ein Verformungsbereich ist, der durch die Wirkung des Bremselementes auf die Bremsscheibe in axialer Richtung elastisch verformbar ist. Im Gegensatz zu bekannten Lösungen kann hier die Bremsscheibe an dem Rotationsteil axial fixiert sein. Überhaupt kann eine starre Verbindung zwischen Bremsscheibe und Rotationsteil vorgesehen werden. Dadurch wird die Bremswirkung erhöht, insbesondere wird die Bremskraft unmittelbar auf den Rotationsteil übertragen.

Eine bevorzugte Ausführungsform zeichnet sich dadurch aus, dass im Verformungsbereich Ausschnitte, vorzugsweise in Form von Durchbrechungen, und/oder Materialschwächungen ausgebildet sind. Durch die Anzahl der Ausschnitte kann der Grad der Verformbarkeit festgelegt und für verschiedene Anwendungsgebiete optimiert werden. Alternativ kann sich der Verformungsbereich auch durch geringere Materialdicke im Vergleich zum inneren Bereich und/oder Reibflächenbereich auszeichnen.

Eine bevorzugte Ausführungsform zeichnet sich dadurch aus, dass im Verformungsbereich die Gesamtfläche der Ausschnitte zumindest so groß ist wie die Gesamtfläche, die vom verbleibenden Material eingenommen wird. Dadurch wird eine ausreichende Verformung gewährleistet, insbesondere für den Fall, dass der Reibflächenbereich in der Bremsstellung gegen eine zweite Gegenfläche gedrückt wird.

Eine bevorzugte Ausführungsform zeichnet sich dadurch aus, dass der Reibflächenbereich eine zweite Reibfläche, die an der zweiten, der ersten Seite gegenüberliegenden Seite der Bremsscheibe ausgebildet ist, aufweist, und dass der Reibflächenbereich der Bremsscheibe zwischen der ersten Gegenfläche und einer zweiten Gegenfläche, die der zweiten Reibfläche zugewandt ist und in der Bremsstellung mit der zweiten Reibfläche zusammenwirkt, angeordnet ist. In der gelösten Stellung der Bremseinrichtung ist zwischen den jeweiligen zusammenwirkenden Flächen ein Bremsspalt ausgebildet. Durch einen verformbaren Zwischenbereich kann auf elegante Weise - und alternativ zu einer axialen Verschiebbarkeit der Bremsscheibe relativ zum Rotationsteil - gewährleistet werden, dass durch eine Verformung der Bremsscheibe in axialer Richtung der/die Bremsspalte vollflächig geschlossen werden.

Eine bevorzugte Ausführungsform zeichnet sich dadurch aus, dass die erste Gegenfläche ringförmig ist und/oder dass die zweite Gegenfläche ringförmig ist.

Eine bevorzugte Ausführungsform zeichnet sich dadurch aus, dass der Reibflächenbereich in der Peripherie der Bremsscheibe angeordnet ist, wobei vorzugsweise die erste Reibfläche und/oder die zweite Reibfläche bis an den Außenrand der Bremsscheibe reichen. Wie bereits erwähnt ist die Bremswirkung im äußersten Bereich der Bremsscheibe am größten.

Eine bevorzugte Ausführungsform zeichnet sich dadurch aus, dass die Differenz zwischen dem Außenradius und dem Innenradius des Reibflächenbereiches höchstens 1/3, vorzugsweise höchstens 1/4, des Außenradius der Bremsscheibe beträgt.

Eine bevorzugte Ausführungsform zeichnet sich dadurch aus, dass der elektromechanische Antrieb ein Gehäuse aufweist und dass die zweite Gegenfläche an einem Gehäuseteil oder an einem mit dem Gehäuseteil fest verbundenen Element ausgebildet ist. Durch diese Maßnahme kann das Bremsmoment direkt in das (stationäre) Gehäuse eingeleitet werden. Auch die in Form von Wärme abgegebene Bremsenergie kann ins Gehäuse übergehen, wodurch auf eine aufwendige Bremskühlung verzichtet werden kann, da die Wärme direkt über das Gehäuse nach außen geleitet werden kann.

Eine bevorzugte Ausführungsform zeichnet sich dadurch aus, dass der innere Bereich der Bremsscheibe zumindest eine, vorzugsweise mehrere - vorzugsweise ringförmig angeordnete - Befestigungsschnittstellen, vorzugsweise in Form von Löchern, zur Befestigung der Bremsscheibe an den Rotationsteil aufweist, wobei vorzugsweise die Anzahl der Befestigungsschnittstellen größer als 10 und/oder größer als die Anzahl der Aus-schnitte im Verformungsbereich ist. Besonders bevorzugt ist hier eine starre Verbindung zwischen Bremsscheibe und Rotationsteil, welche z.B. durch Schrauben gewährleistet werden kann.

Eine bevorzugte Ausführungsform zeichnet sich dadurch aus, dass in der gelösten Stellung der Bremseinrichtung die erste Reibfläche und die erste Gegenfläche von einer parallelen Ausrichtung abweichen und/oder dass in der gelösten Stellung der Bremseinrichtung die zweite Reibfläche und die zweite Gegenfläche von einer parallelen Ausrichtung abweichen. Mit dieser Maßnahme kann z.B. der Druck an einem weiter innenliegenden Abschnitt des Reibflächenbereiches verringert werden, während er in einem weiter außen liegenden Abschnitt relativ dazu erhöht werden kann. Dadurch lässt sich bei entsprechender Dimensionierung der Reib- bzw. Gegenfläche(n) (bzw. des Bremsspaltes) eine gleichmäßigere Druckverteilung erreichen. Dies führt zu weniger Verschleiß und erhöhter Lebensdauer. Diese Vorteile lassen sich beispielsweise auch durch folgende bevorzugte Ausführungsformen erreichen.

Eine bevorzugte Ausführungsform zeichnet sich dadurch aus,
dass der Abstand zwischen der ersten Reibfläche und der ersten Gegenfläche in radialer Richtung abnimmt, wobei vorzugsweise dieser Abstand an dem radial äußeren Rand der ersten Reibfläche um höchstens 1mm, bevorzugt um höchstens 0,2mm, kleiner ist als an dem radial inneren Rand der ersten Reibfläche,
und/oder dass der Abstand zwischen der zweiten Reibfläche und der zweiten Gegenfläche in radialer Richtung abnimmt, wobei vorzugsweise dieser Abstand an dem radial äußeren Rand der zweiten Reibfläche um höchstens 1mm, bevorzugt um höchstens 0,2mm, kleiner ist als an dem radial inneren Rand der zweiten Reibfläche.

In der Bremsstellung wird sodann der Druck an einem weiter innenliegenden Abschnitt des Reibflächenbereiches verringert, während er in einem weiter außen liegenden Abschnitt relativ dazu erhöht wird. Außerdem kann dadurch in gewissem Ausmaß eine Anpassung an eine - sich während des Bremsvorganges in axialer Richtung verbiegende - Bremsscheibe erfolgen.

Eine bevorzugte Ausführungsform zeichnet sich dadurch aus, dass in der gelösten Stellung der Bremseinrichtung die erste Reibfläche und die erste Gegenfläche zueinander geneigt sind und/oder dass in der gelösten Stellung der Bremseinrichtung die zweite Reibfläche und die zweite Gegenfläche zueinander geneigt sind.

Eine bevorzugte Ausführungsform zeichnet sich dadurch aus, dass die erste Reibfläche und/oder die erste Gegenfläche in radialer Richtung einen gekrümmten Verlauf aufweisen und/oder dass die zweite Reibfläche und/oder die zweite Gegenfläche in radialer Richtung einen gekrümmten Verlauf aufweisen.

Eine bevorzugte Ausführungsform zeichnet sich dadurch aus, dass der innere Bereich der Bremsscheibe an dem Rotationsteil axial fixiert ist und/oder dass der innere Bereich der Bremsscheibe mit dem Rotationsteil starr verbunden ist, vorzugsweise über Schrauben.

Eine bevorzugte Ausführungsform zeichnet sich dadurch aus, dass zwischen dem inneren Bereich der Bremsscheibe und dem Rotationsteil ein erster Distanzring angeordnet ist, wobei vorzugsweise der innere Bereich der Bremsscheibe zwischen dem ersten Distanzring und einem zweiten Distanzring eingezwängt ist, vorzugsweise mittels Schrauben. Der/die Distanzringe können dazu verwendet werden, die Relativposition der Reibfläche(n) relativ zu der/den Gegenfläche(n) einzustellen bzw. zu optimieren. Sie sorgen zudem für eine gleichmäßige Druckverteilung.

Eine bevorzugte Ausführungsform zeichnet sich dadurch aus, dass der elektromechanische Antrieb ein Spindelantrieb ist, wobei der Rotationsteil, mit dem die Bremsscheibe verbunden ist, in Form einer Gewindemutter ausgebildet ist, welche mit der Spindel des Spindelantriebs zusammenwirkt.

Eine bevorzugte Ausführungsform zeichnet sich dadurch aus, dass die Bremsscheibe einen scheibenförmigen Grundkörper aufweist und dass die erste Reibfläche und/oder die zweite Reibfläche durch einen vorzugsweise ringförmigen Bremsbelag gebildet wird, welcher auf dem Grundkörper aufgebracht ist und/oder in axialer Richtung über den Grundkörper vorsteht.

Eine bevorzugte Ausführungsform zeichnet sich dadurch aus, dass das Bremselement in Richtung Bremsstellung vorgespannt ist. Unabhängig von einer Betätigung oder Bestromung kann hier also durch passive (Feder)Elemente die Bremsstellung gehalten werden.

Eine bevorzugte Ausführungsform zeichnet sich dadurch aus, dass das Bremselement in Richtung Bremsstellung durch eine Vielzahl von Federn, die ringförmig und vorzugsweise mit der ersten Gegenfläche überlappend angeordnet sind, vorgespannt ist.

Eine bevorzugte Ausführungsform zeichnet sich dadurch aus, dass die Federn in einem abnehmbaren Gehäuseteil des elektromechanischen Antriebes eingesetzt sind.

Eine bevorzugte Ausführungsform zeichnet sich dadurch aus, dass die Bremseinrichtung einen - von der Steuereinrichtung ansteuerbaren - Aktor, vorzugsweise in Form eines Elektromagneten, umfasst, durch den das Bremselement in die gelöste Stellung und/oder in die Bremsstellung bringbar ist, wobei vorzugsweise der Aktor in einem abnehmbaren Gehäuseteil des elektromechanischen Antriebes eingesetzt ist. Eine solche Variante hat den Vorteil, dass bei Stromausfall oder einem Ansteuerungsfehler die Elektromagnete stromlos sind und die Bremseinrichtung automatisch in die Bremsstellung fällt.

Eine bevorzugte Ausführungsform zeichnet sich dadurch aus, dass die Bremseinrichtung in dem elektromechanischen Antrieb integriert ist und/oder dass der Motor und die Bremseinrichtung in einem gemeinsamen Gehäuse untergebracht sind. Dadurch wird die Unmittelbarkeit der Bremswirkung erhöht, da das Bremsen im unmittelbaren Bereich der Generierung des Motormoments erfolgt.

Eine bevorzugte Ausführungsform der Umformvorrichtung zeichnet sich dadurch aus, dass die Steuereinrichtung mit dem hinterlegten Betriebsmodus dazu eingerichtet ist, durch Ansteuerung der elektrischen Antriebsquelle und der Bremseinrichtung die Umformmaschine gemäß einem erfindungsgemäßen Verfahren, insbesondere nach einem der oben beschriebenen Ausführungsformen zu betreiben.

Eine bevorzugte Ausführungsform des Verfahrens zeichnet sich dadurch aus, dass die Umformmaschine gemäß der Erfindung, insbesondere nach einem der oben beschriebenen Ausführungsformen ausgebildet ist.

Das Ziel wird auch erreicht mit einer Umformmaschine, insbesondere Biegemaschine, vorzugsweise einer Biegepresse, mit zumindest einem Antrieb für die Arbeitsbewegung, insbesondere einem Pressantrieb, wobei der zumindest eine Antrieb ein elektromechanischer Antrieb gemäß einer oben beschriebenen Ausführungsform ist. Eine solche Umformmaschine kann einen ersten (z.B. oberen) Werkzeugträger und einen zweiten (z.B. unteren) Werkzeugträger umfassen, deren Relativbewegung die Arbeitsbewegung ist. Der oben beschriebene elektromechanische Antrieb eignet sich besonders gut für den Einsatz in einer Umformmaschine, da die vorgeschlagene Bremseinrichtung besonders schnell reagiert und damit insbesondere das Bedienpersonal zuverlässig geschützt (insbesondere in Fällen, in denen eine Abschaltung oder ein Stopp/Verlangsamung der Arbeitsbewegung für die Sicherheit relevant ist) aber auch Werkstücke vor falschen bzw. fehlerbehafteten Bearbeitungsroutinen "geschützt" werden.

Zum besseren Verständnis der Erfindung wird diese anhand der nachfolgenden Figuren näher erläutert.

Es zeigen jeweils in stark vereinfachter, schematischer Darstellung:
- Fig. 1: einen elektromechanischen Antrieb im Schnitt;
- Fig. 2: einen Ausschnitt einer Bremseinrichtung mit perspektivischem Einblick;
- Fig. 3: eine Bremseinrichtung im Schnitt;
- Fig. 4: eine Bremsscheibe;
- Fig. 5: das Zusammenwirken des Bremselementes und der Bremsscheibe;
- Fig. 6: eine Bremseinrichtung in gelöster Stellung;
- Fig. 7: eine Bremseinrichtung in gelöster Stellung;
- Fig. 8: eine Bremseinrichtung mit zweiter Brems- und Gegenfläche in gelöster Stellung;
- Fig. 9: eine Bremseinrichtung mit zweiter Brems- und Gegenfläche in gelöster Stellung;
- Fig. 10: eine Bremseinrichtung mit vorgespanntem Bremselement;
- Fig. 11: einen Gehäuseteil mit Aufnahmen für Federn und einer Aufnahme für einen Aktor;
- Fig. 12: eine Umformmaschine, in Form einer Biegepresse, mit elektromechanischen Antrieben;
- Fig. 13: eine Steuereinrichtung mit einem elektromechanischen Antrieb;
- Fig. 14: in einer ersten Ausführungsform den zeitlichen Verlauf des Antriebsmomentes der Antriebsquelle und des Bremsmomentes der Bremseinrichtung;
- Fig. 15: in einer zweiten Ausführungsform den zeitlichen Verlauf des (im wesentlichen konstanten) Antriebsmomentes der Antriebsquelle und des (intermittierenden) Bremsmomentes der Bremseinrichtung bei intermittierender Arbeitsbewegung;
- Fig. 16: in einer dritten Ausführungsform den zeitlichen Verlauf des (intermittierenden) Antriebsmomentes und des (intermittierenden) Bremsmomentes bei intermittierender Arbeitsbewegung;
- Fig. 17: den während eines Umformschrittes zurückgelegten Weg eines Umformwerkzeuges.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Schutzbereich ist durch die Ansprüche bestimmt. Die Beschreibung und die Zeichnungen sind jedoch zur Auslegung der Ansprüche heranzuziehen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

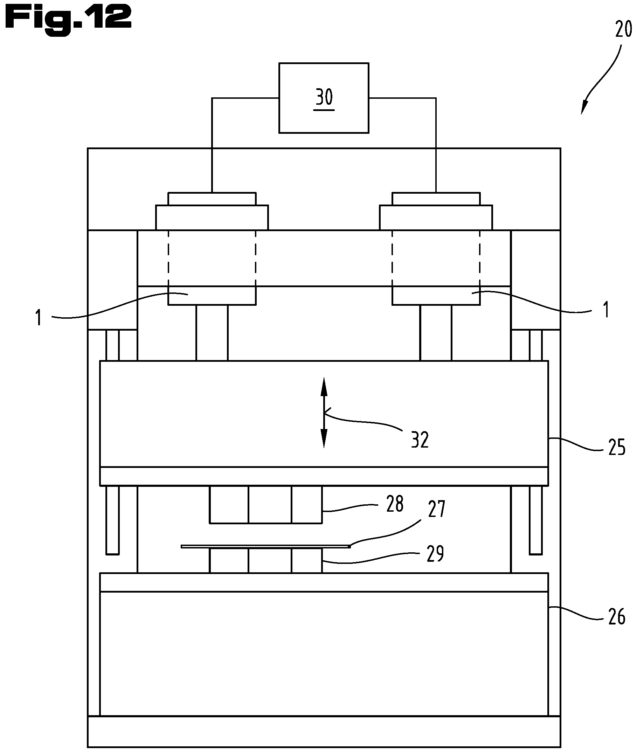

Fig. 12 zeigt eine Umformmaschine (in Form einer Biegemaschine) zum Umformen (Biegen) eines, vorzugsweise plattenförmigen, Werkstückes 27. Die Umformmaschine 20 umfasst zumindest einen - eine elektrische Antriebsquelle 2 aufweisenden - elektromechanischen Antrieb 1, welcher in der Ausführungsform gemäß Fig. 12 einen Pressantrieb darstellt.

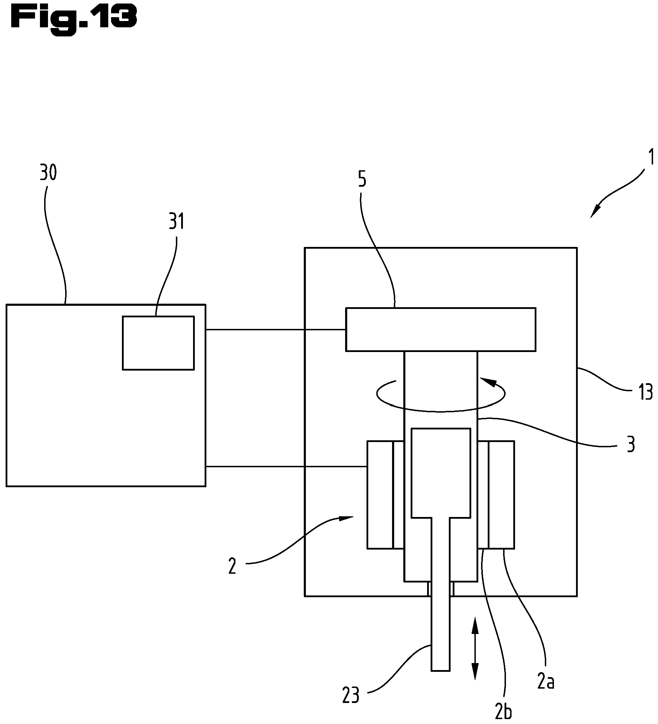

Die Umformmaschine umfasst zumindest ein Umformwerkzeug 28, dessen Arbeitsbewegung 32 durch den elektromechanischen Antrieb 1 bewirkt wird, und zumindest eine zwischen einer gelösten Stellung und einer Bremsstellung betätigbare Bremseinrichtung 5 zum Bremsen und/oder Blockieren der Arbeitsbewegung 32 des Umformwerkzeuges 28 (siehe Fig. 13).

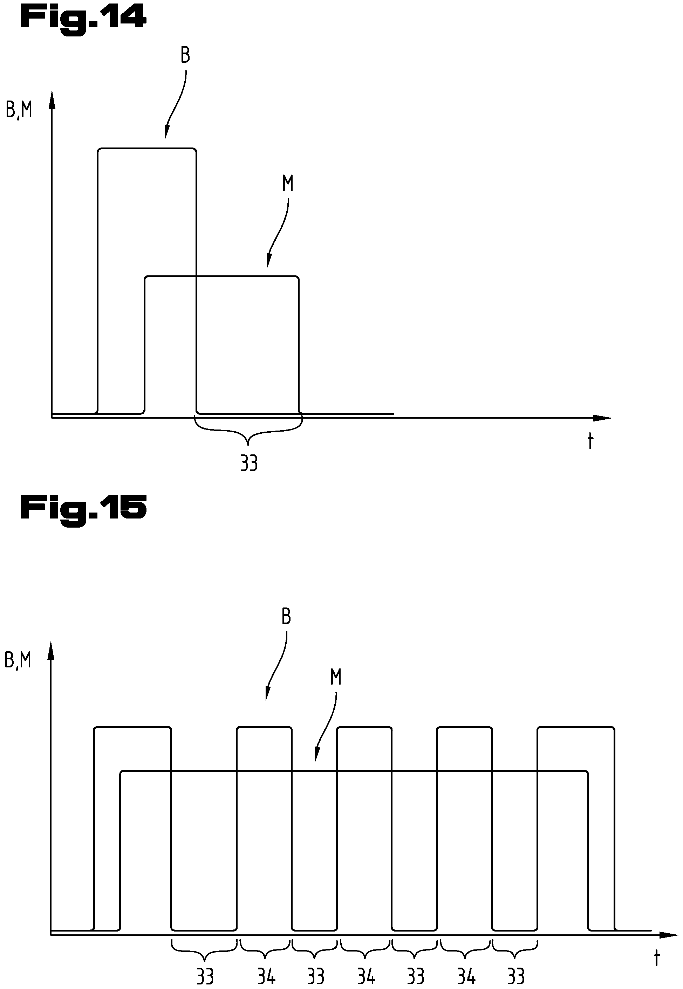

In den Fig. 14 und 15 sind nun Verfahren zum Umformen eines Werkstückes 17 schematisch dargestellt. In Fig. 14 ist zu sehen, dass vor einer Bewegungsphase 33 des Umformwerkzeuges 28 die elektrische Antriebsquelle 2 ein Antriebsmoment M generiert, während die Bremseinrichtung 5 in der Bremsstellung ist, sodass das Bremsmoment B der Bremseinrichtung 5 dem Antriebsmoment M der elektrischen Antriebsquelle 2 entgegenwirkt. Der Beginn der Bewegungsphase 33 des Umformwerkzeuges 28 wird durch Überführen der Bremseinrichtung 5 in die gelöste Stellung und/oder in eine Stellung mit verringertem Bremsmoment ausgelöst.

In Fig. 15 ist zusätzlich zu sehen, dass während eines Umformschrittes die Arbeitsbewegung 32 des Umformwerkzeuges 28 intermittierend erfolgt.

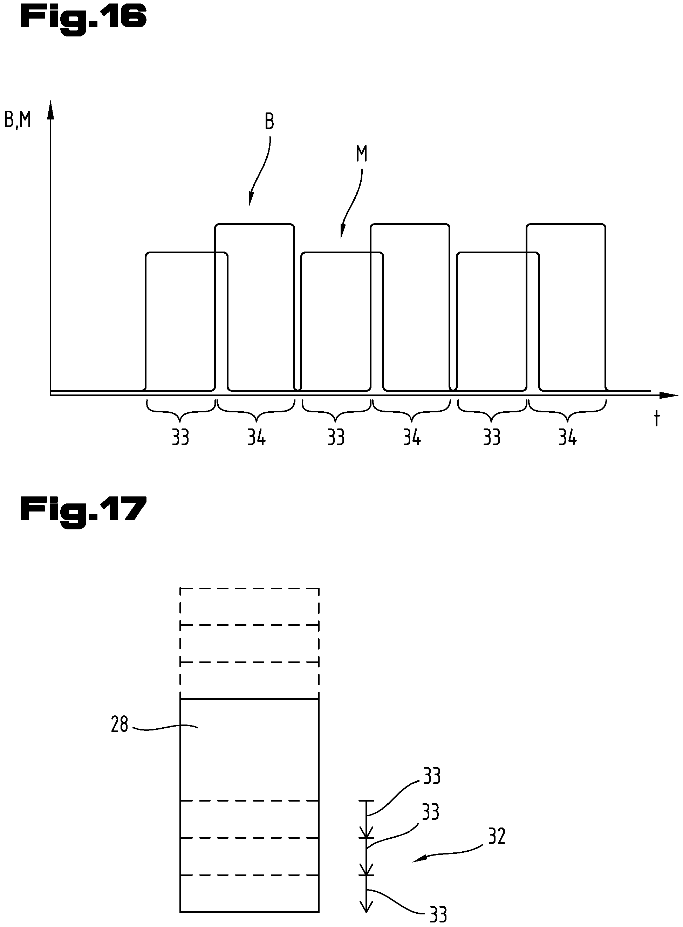

Die einzelnen Bewegungsphasen 33 der Arbeitsbewegung 32 des Umformwerkzeuges 28 sind in Fig. 17 schematisch dargestellt. Der sich der während einer intermittierenden Arbeitsbewegung 32 zurückgelegte Weg des Umformwerkzeuges 28 setzt sich aus den während der einzelnen Bewegungsphasen 33 der intermittierenden Arbeitsbewegung 32 zurückgelegten Wegabschnitten zusammen. Hier ist auch zu sehen, dass die Bewegungsrichtung des Umformwerkzeuges 28 in den einzelnen Bewegungsphasen 33 einer intermittierenden Arbeitsbewegung 32 unverändert bleiben kann.

Fig. 16 zeigt schließlich eine Variante, bei der auch das Antriebsmoment M der elektrischen Antriebsquelle 2 intermittierend generiert wird, um eine intermittierende Arbeitsbewegung zu erreichen.

Die Arbeitsbewegung 32 des Umformwerkzeuges 28 umfasst während eines Umformschrittes vorzugsweise mehrere Bewegungsphasen 33, wobei die Bewegungsphasen 33 unterbrochen sind durch Phasen 34, in denen das Umformwerkzeug 28 stillsteht oder mit geringerer Geschwindigkeit als in der Bewegungsphase 33 bewegt wird. Bevorzugt beträgt jeweils die Länge einer einzelnen Bewegungsphase 33 weniger als 3 Sekunden, bevorzugt weniger als 1,5 Sekunden. Bevorzugt beträgt jeweils die Länge einer Phase 34, in denen das Umformwerkzeug 28 stillsteht oder mit geringerer Geschwindigkeit als in der Bewegungsphase 33 bewegt wird, weniger als 3 Sekunden, bevorzugt weniger als 1,5 Sekunden. Dadurch kann z.B. eine "hämmernde" Einwirkung des Umformwerkzeuges 28 auf das Werkstück 27 erreicht werden.

Aus der Variante gemäß Fig. 15 ist zu sehen, dass eine intermittierende Arbeitsbewegung des Umformwerkzeuges 28 durch eine intermittierende Betätigung der Bremseinrichtung 5 zwischen gelöster Stellung und Bremsstellung bewirkt wird. Das auf den Rotationsteil 3 wirkende Bremsmoment B kann - während jener Phasen der intermittierenden Betätigung der Bremseinrichtung 5, in denen sich die Bremseinrichtung 5 in der Bremsstellung befindet - höher sein als das auf den Rotationsteil 3 wirkende Antriebsmoment M. In diesem Fall führt die Betätigung der Bremseinrichtung 5 zu einem (kurzzeitigen) Stoppen des Umformwerkzeuges 28.

Die elektrische Antriebsquelle 2 kann auch während jener Phasen der intermittierenden Betätigung der Bremseinrichtung 5, in denen sich die Bremseinrichtung 5 in der Bremsstellung befindet, ein Antriebsmoment M generieren. Z.B. kann das Antriebsmoment M während eines Umformschrittes mit intermittierender Arbeitsbewegung 32 des Umformwerkzeuges 28 im Wesentlichen konstant gehalten werden.

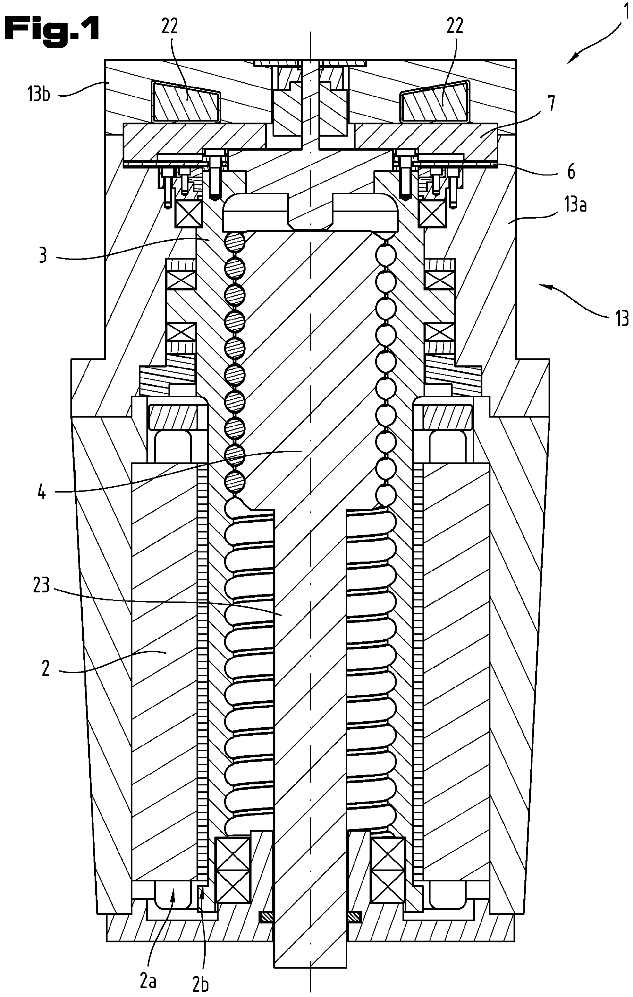

Aus Fig. 13 - sowie aus den später im Detail beschriebenen bevorzugten Ausführungsformen der Fig. 1 bis 9 - ist ersichtlich , dass der elektromechanische Antrieb 1 einen Rotationsteil 3 umfasst und die Bremseinrichtung 5 auf den Rotationsteil 3 wirkt. Die elektrische Antriebsquelle 2, welche durch einen Motor gebildet sein kann, wirkt mit ihrem Antriebsmoment M ebenfalls auf den Rotationsteil 3.

Im Falle eines elektrischen Motors kann die Antriebsquelle 2 einen Stator 2a, der z.B. mit dem Gehäuse 13 verbunden ist und/oder relativ zum Gehäuse 13 stationär ist, und einen Rotor 2b, der z.B. mit dem Rotationsteil 3 verbunden ist oder direkt am Rotationsteil 3 angeordnet ist, umfassen. Entsprechende Versorgungs- und/oder Steuerleitungen führen zu der elektrischen Antriebsquelle 2.

Wie später noch am Beispiel eines Spindelantriebes näher beschrieben kann der elektromechanische Antrieb 1 einen Übertragungsmechanismus, insbesondere ein Lineargetriebe, umfassen, der die Rotation des Rotationsteils 3 in eine lineare Bewegung eines Übertragungselementes 23, welches direkt oder indirekt auf das Umformwerkzeug 28 wirkt, umwandelt werden. Das Übertragungselement 23 kann z.B. in Form einer Spindel oder einer Zahnstange (auf die ein rotierendes Zahnrad wirkt) ausgebildet sein.

Die Bremseinrichtung 5 ist - wie in Fig. 13 dargestellt vorzugsweise - in dem elektromechanischen Antrieb 1 integriert. Die elektrische Antriebsquelle 2 und die Bremseinrichtung 5 können in demselben Gehäuse 13 untergebracht sein.

Fig. 13 zeigt auch eine Steuereinrichtung 30 der Umformmaschine 20 zur Steuerung der elektrischen Antriebsquelle 2 und der Bremseinrichtung 5. In der Steuereinrichtung 30 ist ein Betriebsmodus 31 hinterlegt, durch den die elektrische Antriebsquelle 2 und die Bremseinrichtung 5 derart ansteuerbar sind, dass die oben beschriebenen Verfahren ausgeführt werden können. Das Zusammenspiel zwischen Antriebsquelle 2 und Bremseinrichtung 5 wurde bereits oben ausführlich beschrieben. Das erfindungsgemäße (Entgegen-)Wirken von Antriebsmoment M und Bremsmoment B ermöglicht die in der Beschreibungseinleitung erwähnten Vorteile.

Im Folgenden werden anhand der Fig. 1 bis 11 weitere bevorzugte Ausführungsformen des elektromechanischen Antriebes 1 näher beschrieben. Diese eignen sich besonders für die Durchführung des erfindungsgemäßen Verfahrens.

Fig. 1 zeigt einen elektromechanischen Antrieb 1 umfassend einen Motor 2 und einen Rotationsteil 3, der durch den Motor 2 um eine Rotationsachse 4 in Rotation versetzbar ist. Der Motor weist einen Stator 2a, der z.B. an der Innenseite des Gehäuses 13 gelagert ist (z.B. in Form von Wicklungen), und einen Rotor 2b, der z.B. mit dem Rotationsteil 3 verbunden und/oder direkt an dem Rotationsteil 3 angeordnet ist (z.B. in Form von Permanentmagneten), auf.

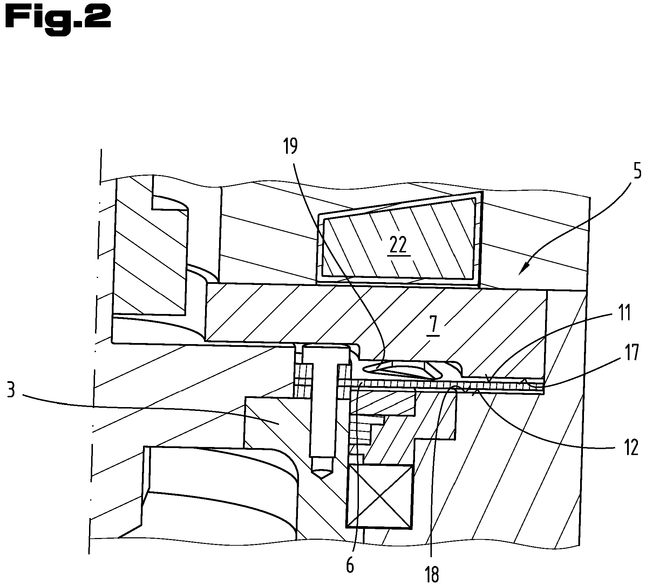

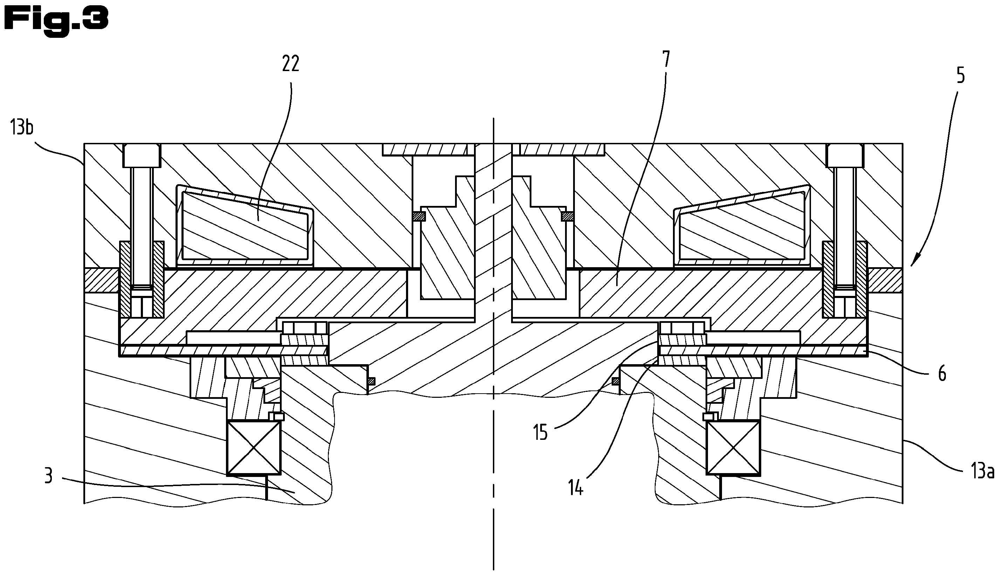

Der elektromechanische Antrieb 1 umfasst weiters eine zwischen einer Bremsstellung und einer gelösten Stellung betätigbare Bremseinrichtung 5. Die Bremseinrichtung 5 weist eine mit dem Rotationsteil 3 mitdrehende Bremsscheibe 6 und ein in axialer Richtung verstellbares Bremselement 7, welches in der Bremsstellung auf die Bremsscheibe 6 einwirkt, auf (siehe auch Fig. 2 und 3).

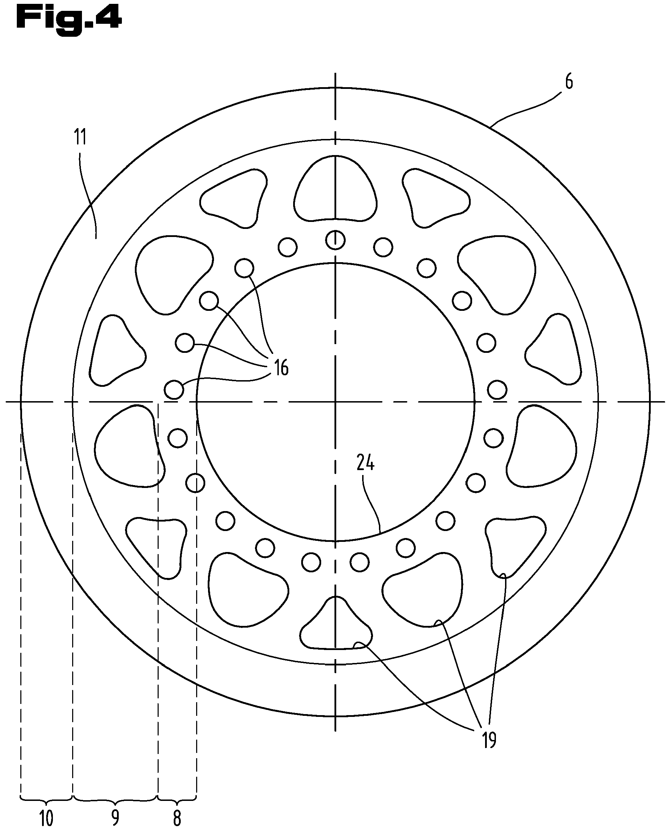

Aus Fig. 4 ist ersichtlich, dass die Bremsscheibe 6
- einen inneren Bereich 8,
- einen ringförmig um die Rotationsachse 4 verlaufenden Reibflächenbe-reich 10 mit einer ersten Reibfläche 11, die an einer ersten Seite der Bremsscheibe 6 ausgebildet ist, und
- einen Zwischenbereich 9, der zwischen dem Reibflächenbereich 10 und dem inneren Bereich 8 um die Rotationsachse 4 verläuft,
aufweisen kann.

An dem Bremselement 7 ist eine erste Gegenfläche 17 ausgebildet ist, die der ersten Reibfläche 11 zugewandt ist und in der Bremsstellung mit der ersten Reibfläche 11 zusammenwirkt.

Bevorzugt sind der Motor 2 und die Bremseinrichtung 5 in einem gemeinsamen Gehäuse 13 untergebracht.

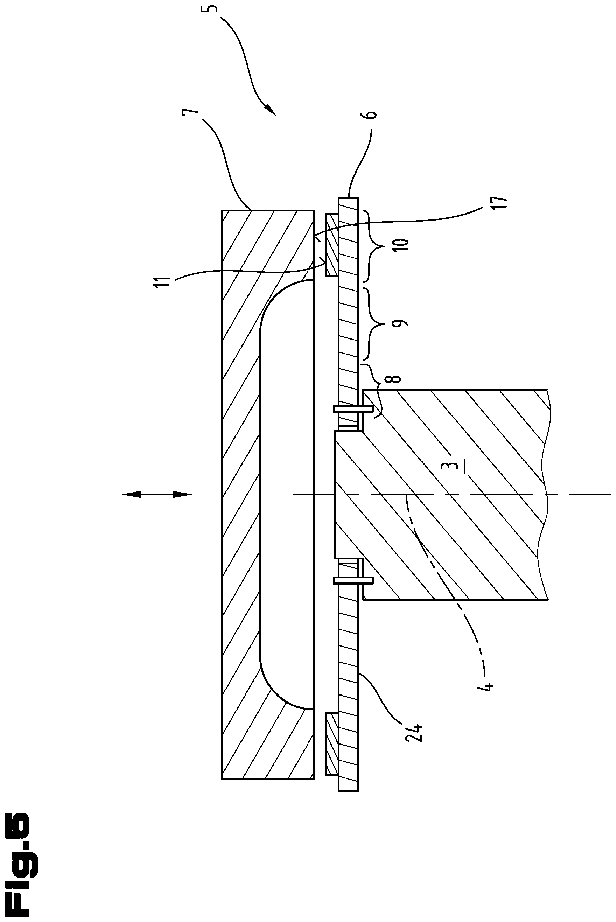

In der dargestellten bevorzugten Ausführungsform ist der Zwischenbereich 9 der Bremsscheibe 6 - sowohl in der gelösten Stellung als auch in der Bremsstellung - kontaktfrei zu dem Bremselement 7. In der Bremsstellung ist der Kontakt des Bremselementes 7 mit der Bremsscheibe 6 auf die erste Reibfläche 11 beschränkt (siehe Fig. 3, 7 und 9). Wie z.B. auch aus Fig. 5 hervorgeht können dabei die an die erste Gegenfläche 17 angrenzenden Bereiche des Bremselementes 7 hinter die Gegenfläche 17 zurückversetzt sein.

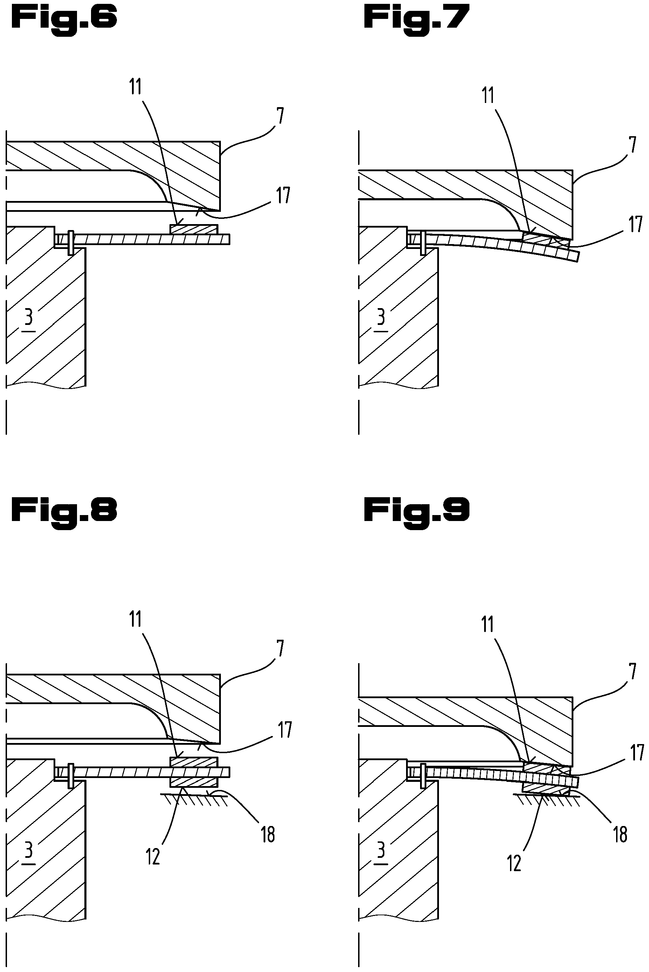

In der in Fig. 4 dargestellten bevorzugten Ausführungsform der Bremsscheibe 6 ist der Zwischenbereich 9 ein Verformungsbereich, der durch die Wirkung des Bremselementes 7 auf die Bremsscheibe 6 in axialer Richtung elastisch verformbar ist (siehe Fig. 7 und 9).

Im Verformungsbereich können - wie in Fig. 4 gezeigt - Ausschnitte 19, vorzugsweise in Form von Durchbrechungen, und/oder Materialschwächungen ausgebildet sein. Es ist bevorzugt, wenn im Verformungsbereich die Gesamtfläche der Ausschnitte 19 zumindest so groß ist wie die Gesamtfläche, die vom verbleibenden Material eingenommen wird.

Während die Ausführungsformen gemäß Fig. 5-7 nur eine erste Reib- und Gegenfläche aufweisen, zeigen die Varianten der Fig. 1-3 sowie Fig. 8 und 9, dass der Reibflächenbereich 10 eine zweite Reibfläche 12, die an der zweiten, der ersten Seite gegenüberliegenden Seite der Bremsscheibe 6 ausgebildet ist, aufweisen kann. Der Reibflächenbereich 10 der Bremsscheibe 6 ist zwischen der ersten Gegenfläche 17 und einer zweiten Gegenfläche 18, die der zweiten Reibfläche 12 zugewandt ist und in der Bremsstellung mit der zweiten Reibfläche 12 zusammenwirkt, angeordnet.

Die Bremsscheibe 6 weist einen scheibenförmigen Grundkörper 24 auf. Die erste Reibfläche 11 bzw. die zweite Reibfläche 12 werden jeweils durch einen vorzugsweise ringförmigen Bremsbelag gebildet, welcher auf dem Grundkörper 24 aufgebracht ist und/oder in axialer Richtung über den Grundkörper 26 vorsteht (Fig. 5-9).

Die erste Gegenfläche 17 und die zweite Gegenfläche 18 sind jeweils ringförmig ausgebildet. Denkbar wären auch mehrere unterbrochene, z.B. segmentartig angeordnete Gegenflächenbereiche.

Wie aus Fig. 4 deutlich zu sehen ist, ist der Reibflächenbereich 10 bevorzugt in der Peripherie der Bremsscheibe 6 angeordnet. Dabei kann die erste Reibfläche 11 und/oder die zweite Reibfläche 12 bis an den Außenrand der Bremsscheibe 6 reichen. Die Differenz zwischen dem Außenradius und dem Innenradius des Reibflächenbereiches 10 beträgt bevorzugt höchstens 1/3, vorzugsweise höchstens 1/4, des Außenradius der Bremsscheibe 6.

Fig. 1 und 3 zeigen, dass der elektromechanische Antrieb 1 ein (mehrteiliges) Gehäuse 13 aufweist. Die zweite Gegenfläche 18 kann dabei an einem Gehäuseteil 13a oder an einem mit dem Gehäuseteil 13a fest verbundenen Element ausgebildet sein. Auf diese Weise kann das Bremsmoment und die dabei entstehende Reibungswärme direkt in das Gehäuse eingeleitet werden.

In der in Fig. 4 dargestellten Ausführungsform weist der innere Bereich 8 der Bremsscheibe 6 mehrere - hier ringförmig angeordnete - Befestigungsschnittstellen 16, vorzugsweise in Form von Löchern, zur Befestigung der Bremsscheibe 6 an den Rotationsteil 3 auf. Dabei ist vorzugsweise die Anzahl der Befestigungsschnittstellen 16 größer als 10 und/oder größer als die Anzahl der Ausschnitte 19 im Verformungsbereich. Durch eine hohe Anzahl an Befestigungsschnittstellen kann eine besonders genaue Einstellung der Bremsscheibe relativ zu den Gegenflächen erfolgen.

In den Varianten der Fig. 6-9 weichen - in der gelösten Stellung der Bremseinrichtung 5 - die erste Reibfläche 11 und die erste Gegenfläche 17 von einer parallelen Ausrichtung ab. Ebenso könnte die zweite Reibfläche 12 und die zweite Gegenfläche 18 von einer parallelen Ausrichtung abweichen.

Bevorzugter Weise nimmt der Abstand zwischen der ersten Reibfläche 11 und der ersten Gegenfläche 17 in radialer Richtung ab, wobei vorzugsweise dieser Abstand an dem radial äußeren Rand der ersten Reibfläche 11 um höchstens 1mm, bevorzugt um höchstens 0,2mm, kleiner ist als an dem radial inneren Rand der ersten Reibfläche 11.

Ebenso kann der Abstand zwischen der zweiten Reibfläche 12 und der zweiten Gegenfläche 18 in radialer Richtung abnehmen, wobei vorzugsweise dieser Abstand an dem radial äußeren Rand der zweiten Reibfläche 12 um höchstens 1mm, bevorzugt um höchstens 0,2mm, kleiner ist als an dem radial inneren Rand der zweiten Reibfläche 12.

Die Reibflächen und Gegenflächen können zueinander geneigt sein. Auch können die Reibflächen und Gegenflächen in radialer Richtung einen gekrümmten Verlauf aufweisen.

Wie insbesondere aus den Figuren 1-3 hervorgeht kann der innere Bereich 8 der Bremsscheibe 6 an dem Rotationsteil 3 axial fixiert sein. In den dargestellten Ausführungsformen ist innere Bereich 8 der Bremsscheibe 6 mit dem Rotationsteil 3 überhaupt starr verbunden. Dies erfolgt hier mittels Schrauben, die durch die Löcher (Befestigungsschnittstellen 16; siehe Fig. 4) ragen und die Bremsscheibe gegen den Rotationsteil 3 drücken.

In der Ausführungsform der Fig. 3 ist zu sehen, dass zwischen dem inneren Bereich 8 der Bremsscheibe 6 und dem Rotationsteil 3 ein erster Distanzring 14 angeordnet ist. Der innere Bereich 8 der Bremsscheibe 6 ist zudem zwischen dem ersten Distanzring 14 und einem zweiten Distanzring 15 eingezwängt ist. Dies erfolgt mit denselben - weiter oben erwähnten - Schrauben, die die Bremsscheibe 7 mit dem Rotationsteil 3 fest verbinden.

In der dargestellten bevorzugten Variante ist der elektromechanische Antrieb 1 ein Spindelantrieb, wobei der Rotationsteil 3, mit dem die Bremsscheibe 6 verbunden ist, in Form einer Gewindemutter ausgebildet ist, welche mit der Spindel 23 des Spindelantriebs zusammenwirkt. Das untere Ende der Spindel 23 bewegt sich - bei Betätigung des Motors und Rotation der Gewindemutter (Rotationsteil 3) linear entlang der Rotationsachse 4 nach unten bzw. nach oben (Fig. 1).

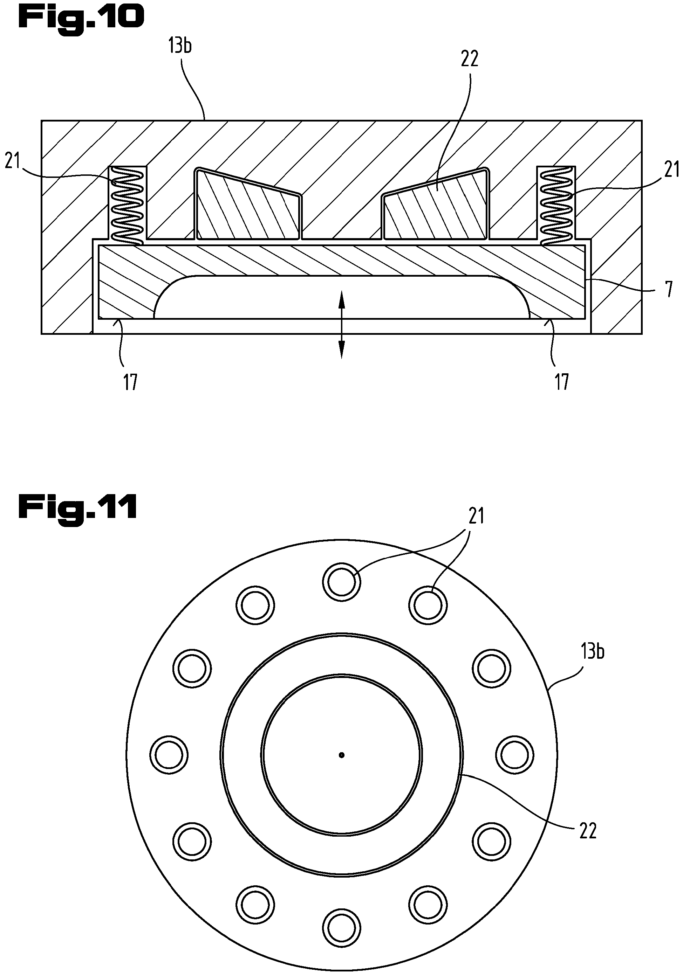

Das Bremselement 7 kann in Richtung Bremsstellung vorgespannt sein. Fig. 10 und 11 zeigen schließlich, dass das Bremselement 7 in Richtung Bremsstellung durch eine Vielzahl von Federn 21, die ringförmig und vorzugsweise mit der ersten Gegenfläche 17 überlappend angeordnet sind, vorgespannt ist.

Die Federn 21 können dabei in einem abnehmbaren Gehäuseteil 13b (z.B. in Form eines Deckels bzw. einer stirnseitigen Abdeckung) des elektromechanischen Antriebes 1 eingesetzt sein.

In den Fig. 1-3 und 10 ist zu sehen, dass die Bremseinrichtung 5 einen Aktor 22, vorzugsweise in Form eines Elektromagneten, umfasst, durch den das Bremselement 6 in die gelöste Stellung und/oder in die Bremsstellung bringbar ist. Der Aktor 22 kann - ebenso wie die federn 21 - in einem abnehmbaren Gehäuseteil 13b des elektromechanischen Antriebes 1 eingesetzt sein.

Fig. 12 zeigt schließlich eine Umformmaschine 20 in Form einer Biegepresse, mit zumindest einem Antrieb für die Arbeitsbewegung (eines Umformwerkzeuges), insbesondere Pressantrieb. Der Antrieb bzw. die Antriebe sind dabei als elektromechanische(r) Antrieb(e) 1 ausgebildet. Eine solche Umformmaschine kann einen ersten (z.B. oberen) Werkzeugträger 25 (zum Halten zumindest eines ersten Umformwerkzeuges 28) und einen zweiten (z.B. unteren) Werkzeugträger 26 (zum Halten zumindest eines zweiten Umformwerkzeuges 29) umfassen, deren Relativbewegung die Arbeitsbewegung ist. Dabei kann - wie in Fig. 12 dargestellt - der zweite Werkzeugträger 26 stationär sein, während der erste Werkzeugträger 25 durch den/die Antrieb(e) 1 bewegbar ist. Der oben beschriebene elektromechanische Antrieb eignet sich besonders gut für den Einsatz in einer Biegemaschine, da die vorgeschlagene Bremseinrichtung besonders schnell reagiert und damit insbesondere das Bedienpersonal zuverlässig geschützt (insbesondere in Fällen, in denen eine Abschaltung oder ein Stopp/Verlangsamung der Arbeitsbewegung für die Sicherheit relevant ist) aber auch Werkstücke vor falschen bzw. fehlerbehafteten Bearbeitungsroutinen "geschützt" werden.

### Bezugszeichenaufstellung

- 1: elektromechanischer Antrieb
- 2: Motor
- 2a: Stator
- 2b: Rotor
- 3: Rotationsteil
- 4: Rotationsachse
- 5: Bremseinrichtung
- 6: Bremsscheibe
- 7: Bremselement
- 8: innerer Bereich
- 9: Zwischenbereich
- 10: Reibflächenbereich
- 11: erste Reibfläche
- 12: zweite Reibfläche
- 13: Gehäuse
- 13a: Gehäuseteil
- 13b: Gehäuseteil
- 14: erster Distanzring
- 15: zweiter Distanzring
- 16: Befestigungsschnittstelle
- 17: erste Gegenfläche
- 18: zweite Gegenfläche
- 19: Ausschnitte
- 20: Umformmaschine
- 21: Feder
- 22: Aktor
- 23: Spindel
- 24: Grundkörper
- 25: erste Werkzeugträger
- 26: zweite Werkzeugträger
- 27: Werkstück
- 28: Umformwerkzeug
- 29: Umformwerkzeug
- 30: Steuereinrichtung
- 31: Betriebsmodus
- 32: Arbeitsbewegung
- 33: Bewegungsphase
- 34: Phase
- B: Bremsmoment
- M: Antriebsmoment

## Patentansprüche

1. Verfahren zum Umformen eines, vorzugsweise plattenförmigen, Werkstückes (27) mit einer Umformmaschine (20), insbesondere einer Biegemaschine, wobei die Umformmaschine (20)
- zumindest einen elektromechanischen Antrieb (1) mit einer elektrischen Antriebsquelle (2),
- zumindest ein Umformwerkzeug (28), dessen Arbeitsbewegung (32) durch den elektromechanischen Antrieb (1) bewirkt wird, und
- zumindest eine zwischen einer gelösten Stellung und einer Bremsstellung betätigbare Bremseinrichtung (5), vorzugsweise in Form einer Reibungsbremse, zum Bremsen und/oder Blockieren der Arbeitsbewegung (32) des Umformwerkzeuges (28)
umfasst, **dadurch gekennzeichnet,**
**dass** vor einer Bewegungsphase (33) des Umformwerkzeuges (28) die elektrische Antriebsquelle (2) ein Antriebsmoment (M) generiert, während die Bremseinrichtung (5) in der Bremsstellung ist, sodass das Bremsmoment (B) der Bremseinrichtung (5) dem Antriebsmoment (M) der elektrischen Antriebsquelle (2) entgegenwirkt, und der Beginn der Bewegungsphase (33) des Umformwerkzeuges (28) durch Überführen der Bremseinrichtung (5) in die gelöste Stellung oder in eine Stellung mit verringertem Bremsmoment ausgelöst wird
und/oder
**dass** während eines Umformschrittes die Arbeitsbewegung (32) des Umformwerkzeuges (28) intermittierend erfolgt, wobei die intermittierende Arbeitsbewegung des Umformwerkzeuges (28) durch eine intermittierende Betätigung der Bremseinrichtung (5) zwischen gelöster Stellung oder Stellung mit verringertem Bremsmoment und Bremsstellung bewirkt wird und die elektrische Antriebsquelle (2) auch während jener Phasen der intermittierenden Betätigung der Bremseinrichtung (5), in denen sich die Bremseinrichtung (5) in der Bremsstellung befindet, ein Antriebsmoment (M) generiert.

2. Verfahren nach Anspruch 1, **dadurch gekennzeichnet, dass** die Bewegungsrichtung des Umformwerkzeuges (28) in den einzelnen Bewegungsphasen (33) einer intermitticrenden Arbeitsbewegung (32) unverändert bleibt
und/oder dass sich der während einer intermittierenden Arbeitsbewegung zurückgelegte Weg des Umformwerkzeuges (28) aus den während der einzelnen Bewegungsphasen (33) der intermittierenden Arbeitsbewegung (32) zurückgelegten Wegabschnitten zusammensetzt.

3. Verfahren nach Anspruch 1 oder 2, **dadurch gekennzeichnet, dass** die Arbeitsbewegung (32) des Umformwerkzeuges (28) während eines Umformschrittes mehrere, vorzugsweise zumindest drei, Bewegungsphasen (33) umfasst, wobei die Bewegungsphasen (33) unterbrochen sind durch Phasen (34), in denen das Umformwerkzeug (28) stillsteht oder mit geringerer Geschwindigkeit als in der Bewegungsphase (33) bewegt wird, wobei vorzugsweise jeweils die Länge einer einzelnen Bewegungsphase (33) weniger als 3 Sekunden, bevorzugt weniger als 1,5 Sekunden, beträgt und/oder wobei vorzugsweise jeweils die Länge einer Phase (34), in denen das Umformwerkzeug (28) stillsteht oder mit geringerer Geschwindigkeit als in der Bewegungsphase (33) bewegt wird, weniger als 3 Sekunden, bevorzugt weniger als 1,5 Sekunden, beträgt.

4. Verfahren nach einem der vorhergehenden Ansprüche, **dadurch gekennzeichnet, dass** das Antriebsmoment (M) des Motors während eines Umformschrittes mit intermittierender Arbeitsbewegung (32) des Umformwerkzeuges (28) im Wesentlichen konstant gehalten wird.

5. Verfahren nach einem der vorhergehenden Ansprüche, **dadurch gekennzeichnet, dass** der elektromechanische Antrieb (1) einen Rotationsteil (3) umfasst und die Bremseinrichtung (5) auf den Rotationsteil (3) wirkt, wobei vorzugsweise die elektrische Antriebsquelle (2) durch einen Motor, dessen Antriebsmoment (M) auf den Rotationsteil (3) wirkt, gebildet ist.

6. Verfahren nach Anspruch 5, **dadurch gekennzeichnet, dass** das auf den Rotationsteil (3) wirkende Bremsmoment (B) - während jener Phasen der intermittierenden Betätigung der Bremseinrichtung (5), in denen sich die Bremseinrichtung (5) in der Bremsstellung befindet - höher ist als das auf den Rotationsteil (3) wirkende Antriebsmoment (M).

7. Verfahren nach einem der vorhergehenden Ansprüche, **dadurch gekennzeichnet, dass** der elektromechanische Antrieb (1) einen Übertragungsmechanismus, insbesondere ein Lineargetriebe, umfasst, der die Rotation des Rotationsteils (3) in eine lineare Bewegung eines Übertragungselementes (23), welches direkt oder indirekt auf das Umformwerkzeug (28) wirkt, umwandelt, wobei vorzugsweise das Übertragungselement (23) in Form einer Spindel ausgebildet ist.

8. Verfahren nach einem der vorhergehenden Ansprüche, **dadurch gekennzeichnet, dass** die Bremseinrichtung (5) in dem elektromechanischen Antrieb (1) integriert ist und/oder dass die elektrische Antriebsquelle (2) und die Bremseinrichtung (5) in demselben Gehäuse (13) untergebracht sind.

9. Umformmaschine (20), insbesondere Biegemaschine, zum Umformen eines, vorzugsweise plattenförmigen, Werkstückes (27),
wobei die Umformmaschine (20)
- zumindest einen elektromechanischen Antrieb (1) mit einer elektrischen Antriebsquelle (2),
- zumindest ein Umformwerkzeug (28), dessen Arbeitsbewegung durch den elektromechanischen Antrieb (1) bewirkt wird,
- zumindest eine zwischen einer gelösten Stellung und einer Bremsstellung betätigbare Bremseinrichtung (5), vorzugsweise in Form einer Reibungsbremse, zum Bremsen und/oder Blockieren der Arbeitsbewegung des Umformwerkzeuges (28) und
- eine Steuereinrichtung (30) zur Steuerung der elektrischen Antriebsquelle (2) und der Bremseinrichtung (5)
umfasst, **dadurch gekennzeichnet, dass** in der Steuereinrichtung (30) ein Betriebsmodus (31) hinterlegt ist, durch den die elektrische Antriebsquelle (2) und die Bremseinrichtung (5) derart ansteuerbar sind,
dass vor einer Bewegungsphase (33) des Umformwerkzeuges (28) die elektrische Antriebsquelle (2) ein Antriebsmoment (M) generiert, während die Bremseinrichtung (5) in der Bremsstellung ist, sodass das Bremsmoment (B) der Bremseinrichtung (5) dem Antriebsmoment (M) der elektrischen Antriebsquelle (2) entgegenwirkt, und der Beginn der Bewegungsphase (33) des Umformwerkzeuges (28) durch Überführen der Bremseinrichtung (5) in die gelöste Stellung oder in eine Stellung mit verringertem Bremsmoment ausgelöst wird
und/oder
dass während eines Umformschrittes die Arbeitsbewegung (32) des Umformwerkzeuges (28) intermittierend erfolgt, wobei die intermittierende Arbeitsbewegung des Umformwerkzeuges (28) durch eine intermittierende Betätigung der Bremseinrichtung (5) zwischen gelöster Stellung oder Stellung mit verringertem Bremsmoment und Bremsstellung bewirkt wird und die elektrische Antriebsquelle (2) auch während jener Phasen der intermittierenden Betätigung der Bremseinrichtung (5), in denen sich die Bremseinrichtung (5) in der Bremsstellung befindet, ein Antriebsmoment (M) generiert.

10. Umformmaschine nach Anspruch 9, **dadurch gekennzeichnet, dass** der elektromechanische Antrieb (1) einen Rotationsteil (3) umfasst und die Bremseinrichtung (5) auf den Rotationsteil (3) wirkt, wobei vorzugsweise die elektrische Antriebsquelle (2) durch einen Motor, dessen Antriebsmoment (M) auf den Rotationsteil (3) wirkt, gebildet ist.

11. Umformmaschine nach Anspruch 9 oder 10, **dadurch gekennzeichnet, dass** die elektrische Antriebsquelle (2) ein Motor ist und dass der elektromechanische Antrieb (1) einen Rotationsteil (3), der durch den Motor (2) um eine Rotationsachse (4) in Rotation versetzbar ist, umfasst und dass die Bremseinrichtung (5) eine mit dem Rotationsteil (3) mitdrehende Bremsscheibe (6) und ein in axialer Richtung verstellbares Bremselement (7), welches in der Bremsstellung auf die Bremsscheibe (6) einwirkt, aufweist,
wobei die Bremsscheibe (6)
- einen inneren Bereich (8),
- einen ringförmig um die Rotationsachse (4) verlaufenden Reibflächenbereich (10) mit einer ersten Reibfläche (11), die an einer ersten Seite der Bremsscheibe (6) ausgebildet ist, und
- einen Zwischenbereich (9), der zwischen dem Reibflächenbereich (10) und dem inneren Bereich (8) um die Rotationsachse (4) verläuft,
aufweist, und dass an dem Bremselement (7) eine erste Gegenfläche (17) ausgebildet ist, die der ersten Reibfläche (11) zugewandt ist und in der Bremsstellung mit der ersten Reibfläche (11) zusammenwirkt.

12. Umformmaschine nach Anspruch 11, **dadurch gekennzeichnet, dass** der Zwischenbereich (9) der Bremsscheibe (6) - sowohl in der gelösten Stellung als auch in der Bremsstellung - kontaktfrei zu dem Bremselement (7) ist und/oder dass in der Bremsstellung der Kontakt des Bremselementes (7) mit der Bremsscheibe (6) auf die erste Reibfläche (11) beschränkt ist.

13. Umformmaschine nach Anspruch 11 oder 12, **dadurch gekennzeichnet, dass** der Zwischenbereich (9) ein Verformungsbereich ist, der durch die Wirkung des Bremselementes (7) auf die Bremsscheibe (6) in axialer Richtung elastisch verformbar ist, wobei vorzugsweise im Verformungsbereich Ausschnitte (19), bevorzugt in Form von Durchbrechungen, und/oder Materialschwächungen ausgebildet sind.

14. Umformmaschine nach einem der Ansprüche 11 bis 13, **dadurch gekennzeichnet, dass** der Reibflächenbereich (10) eine zweite Reibfläche (12), die an der zweiten, der ersten Seite gegenüberliegenden Seite der Bremsscheibe (6) ausgebildet ist, aufweist, und dass der Reibflächenbereich (10) der Bremsscheibe (6) zwischen der ersten Gegenfläche (17) und einer zweiten Gegenfläche (18), die der zweiten Reibfläche (12) zugewandt ist und in der Bremsstellung mit der zweiten Reibfläche (12) zusammenwirkt, angeordnet ist.

15. Umformmaschine nach einem der Ansprüche 11 bis 14, **dadurch gekennzeichnet, dass** der Reibflächenbereich (10) in der Peripherie der Bremsscheibe (6) angeordnet ist, wobei vorzugsweise die erste Reibfläche (11) und/oder die zweite Reibfläche (12) bis an den Außenrand der Bremsscheibe (6) reichen.

16. Umformmaschine nach einem der Ansprüche 11 bis 15, **dadurch gekennzeichnet, dass** in der gelösten Stellung der Bremseinrichtung (5) die erste Reibfläche (11) und die erste Gegenfläche (17) von einer parallelen Ausrichtung abweichen
und/oder dass in der gelösten Stellung der Bremseinrichtung (5) die zweite Reibfläche (12) und die zweite Gegenfläche (18) von einer parallelen Ausrichtung abweichen.

17. Umformmaschine nach einem der Ansprüche 11 bis 16, **dadurch gekennzeichnet,**
**dass** der Abstand zwischen der ersten Reibfläche (11) und der ersten Gegenfläche (17) in radialer Richtung abnimmt, wobei vorzugsweise dieser Abstand an dem radial äußeren Rand der ersten Reibfläche (11) um höchstens 1mm, bevorzugt um höchstens 0,2mm, kleiner ist als an dem radial inneren Rand der ersten Reibfläche (11),
und/oder dass der Abstand zwischen der zweiten Reibfläche (12) und der zweiten Gegenfläche (18) in radialer Richtung abnimmt, wobei vorzugsweise dieser Abstand an dem radial äußeren Rand der zweiten Reibfläche (12) um höchstens 1mm, bevorzugt um höchstens 0,2mm, kleiner ist als an dem radial inneren Rand der zweiten Reibfläche (12).

18. Umformmaschine nach einem der Ansprüche 11 bis 17, **dadurch gekennzeichnet, dass** der innere Bereich (8) der Bremsscheibe (6) an dem Rotationsteil (3) axial fixiert ist und/oder dass der innere Bereich (8) der Bremsscheibe (6) mit dem Rotationsteil (3) starr verbunden ist, vorzugsweise über Schrauben.

19. Umformmaschine nach einem der Ansprüche 11 bis 18, **dadurch gekennzeichnet, dass** der elektromechanische Antrieb (1) ein Spindelantrieb ist, wobei der Rotationsteil (3), mit dem die Bremsscheibe (6) verbunden ist, in Form einer Gewindemutter ausgebildet ist, welche mit der Spindel (23) des Spindelantriebs zusammenwirkt.

20. Umformmaschine nach einem der Ansprüche 11 bis 19, **dadurch gekennzeichnet, dass** das Bremselement (7) in Richtung Bremsstellung vorgespannt ist, vorzugweise durch eine Vielzahl von Federn (21), die ringförmig und vorzugsweise mit der ersten Gegenfläche (17) überlappend angeordnet sind und vorzugsweise in einem abnehmbaren Gehäuseteil (13b) des elektromechanischen Antriebes (1) eingesetzt sind.

21. Umformmaschine nach einem der Ansprüche 11 bis 20, **dadurch gekennzeichnet, dass** die Bremseinrichtung (5) zumindest einen - von der Steuereinrichtung (30) ansteuerbaren - Aktor (22), vorzugsweise in Form eines Elektromagneten, umfasst, durch den das Bremselement (6) in die gelöste Stellung und/oder in die Bremsstellung bringbar ist, wobei vorzugsweise der Aktor (22) in einem abnehmbaren Gehäuseteil (13b) des elektromechanischen Antriebes (1) eingesetzt ist.

22. Umformmaschine nach einem der Ansprüche 9 bis 21, **dadurch gekennzeichnet, dass** die Bremseinrichtung (5) in dem elektromechanischen Antrieb (1) integriert ist und/oder dass die elektrische Antriebsquelle (2) und die Bremseinrichtung (5) in demselben Gehäuse (13) untergebracht sind.

23. Umformmaschine nach einem der Ansprüche 9 bis 22, **dadurch gekennzeichnet, dass** die Steuereinrichtung (30) mit dem hinterlegten Betriebsmodus (31) dazu eingerichtet ist, durch Ansteuerung der elektrischen Antriebsquelle (2) und der Bremseinrichtung (5) die Umformmaschine (20) gemäß einem Verfahren nach einem der Ansprüche 1 bis 10 zu betreiben.

24. Verfahren nach einem der Ansprüche 1 bis 8, **dadurch gekennzeichnet, dass** die Umformmaschine (20) nach einem der Ansprüche 9 bis 23 ausgebildet ist.

## Claims

1. A method for forming a, preferably plate-shaped, workpiece (27) with a forming machine (20), in particular a bending machine, wherein the forming machine (20) comprises
- at least one electromechanical drive (1) with an electrical drive source (2),
- at least one forming tool (28), the working movement (32) of which is effected by the electromechanical drive (1), and
- at least one braking device (5), which can be actuated between a released position and a braking position, preferably in the form of a friction brake, for braking and/or blocking the working movement (32) of the forming tool (28),
**characterized in**
**that**, before a movement phase (33) of the forming tool (28), the electrical drive source (2) generates a drive torque (M) while the braking device (5) is in the braking position, so that the braking torque (B) of the braking device (5) counteracts the drive torque (M) of the electrical drive source (2), and the start of the movement phase (33) of the forming tool (28) is triggered by transferring the braking device (5) into the released position or into a position with reduced braking torque,
and/or
**that**, during a forming step, the working movement (32) of the forming tool (28) takes place intermittently, wherein the intermittent working movement of the forming tool (28) is effected by an intermittent actuation of the braking device (5) between the released position or position with reduced braking torque and the braking position, and the electrical drive source (2) also generates a drive torque (M) during those phases of the intermittent actuation of the braking device (5) in which the braking device (5) is in the braking position.

2. The method according to claim 1, **characterized in that** the direction of movement of the forming tool (28) remains unchanged in the individual movement phases (33) of an intermittent working movement (32),
and/or that the path covered by the forming tool (28) during an intermittent working movement is composed of the path sections covered during the individual movement phases (33) of the intermittent working movement (32).

3. The method according to claim 1 or 2, **characterized in that** the working movement (32) of the forming tool (28) during a forming step comprises multiple, preferably at least three, movement phases (33), wherein the movement phases (33) are interrupted by phases (34) in which the forming tool (28) is stationary or is moved at a lower speed than in the movement phase (33), wherein preferably the length of each individual movement phase (33) is less than 3 seconds, preferably less than 1.5 seconds, and/or wherein preferably the length of each phase (34) in which the forming tool (28) is stationary or is moved at a lower speed than in the movement phase (33) is less than 3 seconds, preferably less than 1.5 seconds.

4. The method according to one of the preceding claims, **characterized in that** the drive torque (M) of the motor is kept essentially constant during a forming step with intermittent working movement (32) of the forming tool (28).

5. The method according to one of the preceding claims, **characterized in that** the electromechanical drive (1) comprises a rotary part (3) and the braking device (5) acts on the rotary part (3), wherein preferably the electrical drive source (2) is formed by a motor, the drive torque (M) of which acts on the rotary part (3).

6. The method according to claim 5, **characterized in that** the braking torque (B) acting on the rotary part (3) - during those phases of the intermittent actuation of the braking device (5) in which the braking device (5) is in the braking position - is higher than the drive torque (M) acting on the rotary part (3).

7. The method according to one of the preceding claims, **characterized in that** the electromechanical drive (1) comprises a transmission mechanism, in particular a linear drive, which converts the rotation of the rotary part (3) into a linear movement of a transmission element (23), which acts directly or indirectly on the forming tool (28), wherein preferably the transmission element (23) is provided in the form of a spindle.

8. The method according to one of the preceding claims, **characterized in that** the braking device (5) is integrated in the electromechanical drive (1) and/or that the electrical drive source (2) and the braking device (5) are accommodated in the same housing (13).

9. A forming machine (20), in particular a bending machine, for forming a, preferably plate-shaped, workpiece (27),
wherein the forming machine (20) comprises
- at least one electromechanical drive (1) with an electrical drive source (2),
- at least one forming tool (28), the working movement of which is effected by the electromechanical drive (1),
- at least one braking device (5), which can be actuated between a released position and a braking position, preferably in the form of a friction brake, for braking and/or blocking the working movement of the forming tool (28), and
- a controller (30) for controlling the electrical drive source (2) and the braking device (5),
**characterized in that** an operating mode (31) is stored in the controller (30), by means of which the electrical drive source (2) and the braking device (5) can be controlled in such a way
that, before a movement phase (33) of the forming tool (28), the electrical drive source (2) generates a drive torque (M) while the braking device (5) is in the braking position, so that the braking torque (B) of the braking device (5) counteracts the drive torque (M) of the electrical drive source (2), and the start of the movement phase (33) of the forming tool (28) is triggered by transferring the braking device (5) into the released position or into a position with reduced braking torque,
and/or
that, during a forming step, the working movement (32) of the forming tool (28) takes place intermittently, wherein the intermittent working movement of the forming tool (28) is effected by an intermittent actuation of the braking device (5) between the released position or position with reduced braking torque and the braking position, and the electrical drive source (2) also generates a drive torque (M) during those phases of the intermittent actuation of the braking device (5) in which the braking device (5) is in the braking position.

10. The forming machine according to claim 9, **characterized in that** the electromechanical drive (1) comprises a rotary part (3) and the braking device (5) acts on the rotary part (3), wherein preferably the electrical drive source (2) is formed by a motor, the drive torque (M) of which acts on the rotary part (3).

11. The forming machine according to claim 9 or 10, **characterized in that** the electrical drive source (2) is a motor and that the electromechanical drive (1) comprises a rotary part (3) which can be set in rotation about an axis of rotation (4) by the motor (2), and that the braking device (5) has a brake disc (6) which rotates with the rotary part (3) and a brake element (7) which can be adjusted in the axial direction and which acts on the brake disc (6) in the braking position,
wherein the brake disk (6) comprises
- an inner region (8),
- a friction surface region (10), extending annularly around the axis of rotation (4), with a first friction surface (11), which is formed on a first side of the brake disk (6), and
- an intermediate region (9) which extends between the friction surface region (10) and the inner region (8) around the axis of rotation (4),
and that a first counterface (17) is formed on the brake element (7), which counterface faces the first friction surface (11) and interacts with the first friction surface (11) in the braking position.

12. The forming machine according to claim 11, **characterized in that** the intermediate region (9) of the brake disc (6) - both in the released position and in the braking position - is free of contact with the braking element (7) and/or that, in the braking position, the contact of the braking element (7) with the brake disc (6) is limited to the first friction surface (11).

13. The forming machine according to claim 11 or 12, **characterized in that** the intermediate region (9) is a deformation region which can be elastically deformed in the axial direction by the action of the braking element (7) on the brake disc (6), wherein preferably cutouts (19), preferably in the form of perforations, and/or material weakenings are formed in the deformation region.

14. The forming machine according to one of claims 11 to 13, **characterized in that** the friction surface region (10) has a second friction surface (12), which is formed on the second side of the brake disc (6) opposite the first side, and that the friction surface region (10) of the brake disc (6) is arranged between the first counterface (17) and a second counterface (18), which faces the second friction surface (12) and interacts with the second friction surface (12) in the braking position.

15. The forming machine according to one of claims 11 to 14, **characterized in that** the friction surface region (10) is arranged in the periphery of the brake disc (6), wherein preferably the first friction surface (11) and/or the second friction surface (12) extend to the outer edge of the brake disc (6).

16. The forming machine according to one of claims 11 to 15, **characterized in that**, in the released position of the braking device (5), the first friction surface (11) and the first counterface (17) deviate from a parallel alignment,
and/or that, in the released position of the braking device (5), the second friction surface (12) and the second counterface (18) deviate from a parallel alignment.

17. The forming machine according to one of claims 11 to 16, **characterized in that** the distance between the first friction surface (11) and the first counterface (17) decreases in the radial direction, wherein preferably this distance is smaller at the radially outer edge of the first friction surface (11) by at most 1 mm, preferably by at most 0.2 mm, than at the radially inner edge of the first friction surface (11), and/or that the distance between the second friction surface (12) and the second counterface (18) decreases in the radial direction, wherein preferably this distance is smaller at the radially outer edge of the second friction surface (12) by at most 1 mm, preferably by at most 0.2 mm, than at the radially inner edge of the second friction surface (12).

18. The forming machine according to one of claims 11 to 17, **characterized in that** the inner region (8) of the brake disc (6) is axially fixed to the rotary part (3) and/or that the inner region (8) of the brake disc (6) is rigidly connected to the rotary part (3), preferably via screws.

19. The forming machine according to one of claims 11 to 18, **characterized in that** the electromechanical drive (1) is a spindle drive, wherein the rotary part (3), to which the brake disc (6) is connected, is provided in the form of a threaded nut which interacts with the spindle (23) of the spindle drive.

20. The forming machine according to one of claims 11 to 19, **characterized in that** the braking element (7) is preloaded in the direction of the braking position, preferably by a plurality of springs (21), which are arranged annularly and preferably overlapping with the first counterface (17) and are preferably inserted in a removable housing part (13b) of the electromechanical drive (1).

21. The forming machine according to one of claims 11 to 20, **characterized in that** the braking device (5) comprises at least one actuator (22) - which can be controlled by the controller (30) -, preferably in the form of an electromagnet, by means of which the braking element (6) can be brought into the released position and/or into the braking position, wherein preferably the actuator (22) is inserted in a removable housing part (13b) of the electromechanical drive (1).

22. The forming machine according to one of claims 9 to 21, **characterized in that** the braking device (5) is integrated in the electromechanical drive (1) and/or that the electrical drive source (2) and the braking device (5) are accommodated in the same housing (13).

23. The forming machine according to one of claims 9 to 22, **characterized in that** the controller (30) with the stored operating mode (31) is configured, by controlling the electric drive source (2) and the braking device (5), to operate the forming machine (20) according to a method according to one of claims 1 to 10.

24. The method according to one of claims 1 to 8, **characterized in that** the forming machine (20) is formed according to one of claims 9 to 23.

## Revendications

1. Procédé de formage d'une pièce à usiner (27), de préférence en forme de plaque, avec une machine de formage (20), en particulier une machine de pliage, la machine de formage (20) comprenant
- au moins un entraînement électromécanique (1) avec une source d'entraînement électrique (2),
- au moins un outil de formage (28), dont le mouvement de travail (32) est provoqué par l'entraînement électromécanique (1), et
- au moins un dispositif de freinage (5) actionnable entre une position relâchée et une position de freinage, de préférence sous la forme d'un frein à friction, pour freiner et/ou bloquer le mouvement de travail (32) de l'outil de formage (28), **caractérisé en ce qu'**avant une phase de déplacement (33) de l'outil de formage (28), la source d'entraînement électrique (2) génère un couple d'entraînement (M), tandis que le dispositif de freinage (5) est dans la position de freinage, de sorte que le couple de freinage (B) du dispositif de freinage (5) s'oppose au couple d'entraînement (M) de la source d'entraînement électrique (2), et le début de la phase de déplacement (33) de l'outil de formage (28) est déclenché par le transfert du dispositif de freinage (5) dans la position relâchée ou dans une position avec un couple de freinage réduit
et/ou
**que** pendant une étape de formage, le mouvement de travail (32) de l'outil de formage (28) se produit par intermittence, le mouvement de travail intermittent de l'outil de formage (28) étant provoqué par l'actionnement intermittent du dispositif de freinage (5) entre la position relâchée ou la position avec couple de freinage réduit et la position de freinage et la source d'entraînement électrique (2) produisant également un couple d'entraînement pendant les phases d'actionnement intermittent du dispositif de freinage (5) dans lesquelles le dispositif de freinage (5) qui se trouve en position de freinage génère un couple d'entraînement (M).

2. Procédé selon la revendication 1, **caractérisé en ce que** le sens de déplacement de l'outil de formage (28) reste inchangé dans les différentes phases de déplacement (33) d'un mouvement de travail intermittent (32)
et/ou **en ce que** la trajectoire parcourue par l'outil de formage (28) pendant un mouvement de travail intermittent se compose des sections de trajet parcourues pendant les différentes phases de déplacement (33) du mouvement de travail intermittent (32).

3. Procédé selon la revendication 1 ou 2, **caractérisé en ce que** le mouvement de travail (32) de l'outil de formage (28) pendant une étape de formage comprend plusieurs phases de déplacement (33), de préférence au moins trois, les phases de déplacement (33) étant interrompues par des phases (34) pendant lesquelles l'outil de formage (28) est à l'arrêt ou se déplace à une vitesse plus faible que pendant la phase de déplacement (33), de préférence, la durée de chaque phase de déplacement individuelle (33) étant inférieure à 3 secondes, de préférence inférieure à 1,5 seconde, et/ou de préférence, la durée de chaque phase (34) dans laquelle l'outil de formage (28) est immobile ou se déplace à une vitesse inférieure à celle de la phase de déplacement (33) étant inférieure à 3 secondes, de préférence inférieure à 1,5 seconde.

4. Procédé selon l'une des revendications précédentes, **caractérisé en ce que** le couple d'entraînement (M) du moteur est maintenu essentiellement constant pendant une étape de formage avec un mouvement de travail intermittent (32) de l'outil de formage (28).

5. Procédé selon l'une des revendications précédentes, **caractérisé en ce que** l'entraînement électromécanique (1) comprend une partie rotative (3) et le dispositif de freinage (5) agit sur la partie rotative (3), la source d'entraînement électrique (2) étant de préférence constituée par un moteur dont le couple d'entraînement (M) agit sur la partie rotative (3).

6. Procédé selon la revendication 5, **caractérisé en ce que** le couple de freinage (B) agissant sur la partie rotative (3), pendant les phases d'actionnement intermittent du dispositif de freinage (5), dans lesquelles le dispositif de freinage (5) se trouve dans la position de freinage, est supérieur au couple d'entraînement (M) agissant sur la partie rotative (3).

7. Procédé selon l'une des revendications précédentes, **caractérisé en ce que** l'entraînement électromécanique (1) comprend un mécanisme de transmission, en particulier une transmission linéaire, qui convertit la rotation de la partie rotative (3) en un mouvement linéaire d'un élément de transmission (23) qui agit directement ou indirectement sur l'outil de formage (28), l'élément de transmission (23) étant de préférence conçu sous la forme d'une broche.

8. Procédé selon l'une des revendications précédentes, **caractérisé en ce que** le dispositif de freinage (5) est intégré dans l'entraînement électromécanique (1) et/ou **en ce que** la source d'entraînement électrique (2) et le dispositif de freinage (5) sont logés dans le même boîtier (13).

9. Machine de formage (20), en particulier machine de pliage, pour former une pièce à usiner (27), de préférence en forme de plaque, la machine de formage (20) comprenant
- au moins un entraînement électromécanique (1) avec une source d'entraînement électrique (2),
- au moins un outil de formage (28), dont le mouvement de travail est provoqué par l'entraînement électromécanique (1),
- au moins un dispositif de freinage (5) actionnable entre une position relâchée et une position de freinage, de préférence sous la forme d'un frein à friction, pour freiner et/ou bloquer le mouvement de travail de l'outil de formage (28) et un dispositif de commande (30) pour commander la source d'entraînement électrique (2) et le dispositif de freinage (5),
**caractérisé en ce qu'**un mode de fonctionnement (31) est enregistré dans le dispositif de commande (30), par lequel la source d'entraînement électrique (2) et le dispositif de freinage (5)peuvent être commandés
de telle sorte qu'avant une phase de déplacement (33) de l'outil de formage (28), la source d'entraînement électrique (2) génère un couple d'entraînement (M) pendant que le dispositif de freinage (5) est en position de freinage, de sorte que le couple de freinage (B) du dispositif de freinage (5) s'oppose au couple d'entraînement (M) de la source d'entraînement électrique (2), et le début de la phase de mouvement (33) de l'outil de formage (28) est déclenchée par le transfert du dispositif de freinage (5) dans la position relâchée ou dans une position avec un couple de freinage réduit et/ou
que le mouvement de travail (32) de l'outil de formage (28) se produit par intermittence pendant une étape de formage, le mouvement de travail intermittent de l'outil de formage (28) étant provoqué par un actionnement intermittent du dispositif de freinage (5) entre la position relâchée ou la position avec couple de freinage réduit et la position de freinage et la source d'entraînement électrique (2) générant un couple d'entraînement (M) également pendant les phases d'actionnement intermittent du dispositif de freinage (5) dans lesquelles le dispositif de freinage (5) se trouve dans la position de freinage.

10. Machine de formage selon la revendication 9, **caractérisée en ce que** l'entraînement électromécanique (1) comprend une partie rotative (3) et le dispositif de freinage (5) agit sur la partie rotative (3), la source d'entraînement électrique (2) étant de préférence assurée par un moteur, le couple d'entraînement (M) agissant sur la partie rotative (3).

11. Machine de formage selon la revendication 9 ou 10, **caractérisée en ce que** la source d'entraînement électrique (2) est un moteur et que l'entraînement électromécanique (1) comporte une partie rotative (3) pouvant être mise en rotation autour d'un axe de rotation (4) par le moteur (2) et que le dispositif de freinage (5) présente un disque de frein (6) qui tourne avec la partie rotative (3) et un élément de freinage réglable axialement (7) qui agit sur le disque de frein (6) dans la position de freinage, le disque de frein (6) comprenant
- une zone intérieure (8),
- une zone de surface de friction (10) qui s'étend de manière annulaire autour de l'axe de rotation (4) et présente une première surface de friction (11) qui est formée sur un premier côté du disque de frein (6), et
- une zone intermédiaire (9) qui s'étend entre la zone de surface de friction (10) et la zone intérieure (8) autour de l'axe de rotation (4), et **en ce qu'**une première surface opposée (17) est formée sur l'élément de freinage (7), qui fait face à la première surface de friction (11) et interagit avec la première surface de friction (11) en position de freinage.

12. Machine de formage selon la revendication 11, **caractérisée en ce que** la zone intermédiaire (9) du disque de frein (6) (aussi bien dans la position relâchée que dans la position de freinage) est sans contact avec l'élément de freinage (7) et/ou **en ce que**, dans la position de freinage, le contact de l'élément de freinage (7) avec le disque de frein (6) est limité à la première surface de friction (11).

13. Machine de formage selon la revendication 11 ou 12, **caractérisée en ce que** la zone intermédiaire (9) est une zone de déformation qui peut être déformée élastiquement dans la direction axiale par l'action de l'élément de freinage (7) sur le disque de frein (6), des découpes (19), de préférence sous forme d'ajours, et/ou des affaiblissements de matièr étant de préférence formés dans la zone de déformation.

14. Machine de formage selon l'une des revendications 11 à 13, **caractérisée en ce que** la surface de friction (10) présente une deuxième surface de friction (12) qui est formée sur le deuxième côté du disque de frein (6) opposé au premier côté, et **en ce que** la zone de surface de friction (10) du disque de frein (6) est agencée entre la première surface opposée (17) et une deuxième surface opposée (18) qui est tournée vers la deuxième surface de friction (12) et qui coopère avec la deuxième surface de friction (12) dans la position de freinage.

15. Machine de formage selon l'une des revendications 11 à 14, **caractérisée en ce que** la surface de friction (10) est agencée à la périphérie du disque de frein (6), de préférence la première surface de friction (11) et/ou la deuxième surface de friction (12) s'étendant jusqu'au bord extérieur du disque de frein (6).

16. Machine de formage selon l'une des revendications 11 à 15, **caractérisée en ce que** dans la position relâchée du dispositif de freinage (5), la première surface de friction (11) et la première surface opposée (17) s'écartent d'une orientation parallèle et/ou **en ce que**, dans la position relâchée du dispositif de freinage (5), la deuxième surface de friction (12) et la deuxième surface opposée (18) s'écartent d'une orientation parallèle.

17. Machine de formage selon l'une des revendications 11 à 16, **caractérisé en ce que** la la distance entre la première surface de friction (11) et la première surface opposée (17) diminue dans la direction radiale, cette distance étant de préférence inférieure d'au plus 1 mm, de préférence d'au plus 0,2 mm, au niveau du bord radialement extérieur de la première surface de friction (11) par rapport au bord radialement intérieur de la première surface de friction (11),
et/ou **en ce que** la distance entre la deuxième surface de friction (12) et la deuxième surface opposée (18) diminue dans la direction radiale, cette distance étant de préférence inférieure au bord radialement extérieur de la deuxième surface de friction (12) d'au plus 1 mm, de préférence d'au plus 0,2 mm sur le bord radialement intérieur de la deuxième surface de friction (12).

18. Machine de formage selon l'une des revendications 11 à 17, **caractérisée en ce que** la zone intérieure (8) du disque de frein (6) est fixée axialement à la partie rotative (3) et/ou **en ce que** la zone intérieure (8) du disque de frein (6) est reliée rigidement à la partie rotative (3), de préférence par des vis.

19. Machine de formage selon l'une des revendications 11 à 18, **caractérisée en ce que** l'entraînement électromécanique (1) est un entraînement à vis, la partie rotative (3) à laquelle est relié le disque de frein (6) étant réalisée sous la forme d'un écrou fileté qui coopère avec la vis (23) de l'entraînement à vis.

20. Machine de formage selon l'une des revendications 11 à 19, **caractérisée en ce que** l'élément de freinage (7) est précontraint en direction de la position de freinage, de préférence par une pluralité de ressorts (21) qui sont agencés en forme d'anneau et de préférence en chevauchement avec la première surface opposée (17) et qui sont de préférence insérés dans une partie de boîtier amovible (13b) de l'entraînement électromécanique (1).

21. Machine de formage selon l'une des revendications 11 à 20, **caractérisée en ce que** le dispositif de freinage (5) comprend au moins un actionneur (22) (pouvant être commandé par le dispositif de commande (30)), de préférence sous la forme d'un électroaimant, par lequel l'élément de freinage (6) peut être amené dans la position relâchée et/ou dans la position de freinage, l'actionneur (22) étant de préférence inséré dans une partie de boîtier (13b) amovible de l'entraînement électromécanique (1).

22. Machine de formage selon l'une des revendications 9 à 21, **caractérisée en ce que** le dispositif de freinage (5) est intégré dans l'entraînement électromécanique (1) et/ou la source d'entraînement électrique (2) et le dispositif de freinage (5) sont logés dans le même boîtier (13).

23. Machine de formage selon l'une des revendications 9 à 22, **caractérisée en ce que** le dispositif de commande (30) avec le mode de fonctionnement enregistré (31) est configuré pour faire fonctionner la machine de formage (20) selon un procédé selon l'une des revendications 1 à 10 en commandant la source d'entraînement électrique (2) et le dispositif de freinage (5).

24. Procédé selon l'une des revendications 1 à 8, **caractérisé en ce que** la machine de formage (20) est conçue selon l'une des revendications 9 à 23.
